# EUROPEAN PATENT SPECIFICATION

(11) **EP 0 557 229 B1**
(45) Date of publication and mention of the grant of the patent: **27.09.1995**
(21) Application number: 93500010.9
(22) Date of filing: 03.02.1993
(51) Int. Cl.: F02K 1/00, F02K 1/12

(54) **Thrust vectoring variable geometry exhaust nozzle for gas turbines**
Querschnittsveränderliche schwenkbare Schubdüse für Gasturbinen
Tuyère à poussée dirigeable à section variable pour turbines à gaz

(30) Priority: 20.02.1992 ES 9200369
(43) Date of publication of application: 25.08.1993
(73) Proprietor: SENER, INGENIERIA Y SISTEMAS, S.A., E-48930 Las Arenas (Vizcaya) (ES)
(72) Inventor: Ibarreche Mendia, José Ignacio, Gorliz (Vizcaya) (ES); Rivacoba Urruela, José, Las Arenas (Vizcaya) (ES)
(74) Representative: Gomez-Acebo y Pombo, José Miguel

(56) References cited:
- FR-A- 2 645 593
- GB-A- 2 230 239
- US-A- 5 082 182
- AVIATION WEEK AND SPACE TECHNOLOGY vol. 136, no. 9, March 1992, NEW YORK USpages 44 - 46 , XP000257671 STANLY W. KANDEBO 'GE, Pratt Ground Tests ValidateNozzle Concepts'

## Description

This invention concerns a thrust vectoring variable geometry exhaust nozzle for gas turbines, specially intended for gas turbines used as the means of propulsion in aviation.

More specifically, the exhaust nozzle subject of this invention is of the axisymmetric type consisting of a convergent section followed, in the direction of the flow, by a divergent section, both formed from master petals, connected to each other by cylindrical linkages with axis perpendicular to the axis of the turbine, and slave petals, also connected to each other by cylindrical linkages with axis perpendicular to the axis of the turbine, whose convergent section defines a throat of variable area and whose divergent section has variable geometry in order to orientate the thrust in any direction on a cone located around the longitudinal axis of the turbine.

The manoeuvrability of aircraft is an essential factor. This manoeuvrability, which to date has been achieved by aerodynamic forces, can be substantially improved by modifying the vectoring of the thrust starting from its normal axial direction of action.

The vectoring of the thrust has for many years been used in rocket engines. There, the systems are much simpler since the exhaust nozzles have constant geometry.

Variable geometry convergent-divergent exhaust nozzles are a relatively recent introduction in supersonic aircraft powered by turboreactor or turbofan engines.

In this class of exhaust nozzles, the vectoring systems for the thrust are still not in an operational state and are at the research or development phase. Those that are at a more advanced state are the bidimensional type, in which the thrust is orientated solely in one plane.

Carrying out the vectoring of the thrust in exhaust nozzles with axial symmetry has a special advantage since the direction of the thrust can be varied in any axial plane, the pitch and yaw planes being particularly important.

Several patent exist on mechanisms for vectoring of the thrust in this class of exhaust nozzle, since it is theoretically possible to carry this out in various ways; though it is very difficult to ensure that there are no mayor complications.

In this respect, the patent application USA 336,369 of 1989 (corresponding to GB-A-2 230 239) and Europe 281,264 of 1988 can be mentioned.

These patent applications describe and claim vectoring mechanisms for the thrust in exhaust nozzles of this class and their systems of actions, furthermore slating the special advantages shown by those mechanisms that are claimed in comparison with the other systems that have been the subject of patents.

The most commonly applied mechanism for creating a variable geometry axisymmetric convergent-divergent exhaust nozzle, as can be seen in different turbines currently in operation or being developed, consists of a convergent section comprising a plurality of convergent master petals, interleaved among which are some convergent slave petals for sealing the free spaces or interstices between neighbouring master petals. Beyond this convergent section is another divergent section consisting of the same plurality of divergent master petals, interleaved among which are several divergent slave petals for the sealing. The upstream end, according to the direction of the gas flow, of each divergent master petal is joined by means of a linkage to the convergent master petal, with which it forms a pair. The divergent master petal, in its turn, is joined, at a point intermediate between half of its length and its downstream end, to the downstream end of a strut, by means of a spherical linkage. the upstream end of each convergent master petal and that of each strut are joined by means of cylindrical linkages to a rigid structure which normally forms part of the post-combustor housing of the turbine. The variation in the area of the throat A8 is achieved by means of a roller which is pulled by a ring that is moved axially and is governed by a plurality of actuators connected to it via spherical linkages and which act on a cam which in its turn forms an integral part of the convergent master petal.

On the other hand, it has been well known on the prior art, in fields such as mining, the water cannon consisting of a relatively fixed tube upstream and another tube with a conical extension downstream and interconnected by means of a spherical bearing or a universal-type bearing that allows the conical tube to be orientated with respect to the fixed one in order to deviate the hydraulic jet omnidirectionally. When dealing with powerful hydraulic cannons, the vectoring of the conical tube is done by a system of at least tree bars which, arranged around that tube, interlink the downstream projecting end of it to the external ring of the universal bearing so that, when this is inclined, the corresponding orientating transverse force is transmitted to that projecting end.

Moreover, in recent decades in the field of turbopropulsion turbines, certain vectoring systems for the thrust have been proposed and even developed. All these systems can be classified into three major groups, i.e.:
1) Those that orientate the whole exhaust nozzle upstream of the throat.
2) Those that orientate the divergent part of the exhaust nozzle, i.e. the whole part located immediately downstream of the throat.
3) Those that orientate the flow at the outlet itself of the exhaust nozzle or somewhat more downstream of this.

Orientating the whole exhaust nozzle upstream of the inlet section has the drawback that the perturbations induced by the vectoring are transmitted upstream of the turbine and require a highly complicated sealing device for the interstices between the different mobile components.

The sealing of those interstices is simplified in the case of exhaust nozzles orientable from their throat section. Even so, a seal needs to be provided for the slot formed between one flat convergent petal and its pair, the divergent petal, with which, also being flat, it is linked via a spherical bearing.

Moreover, during the vectoring the geometry of the longitudinal interstices between adjacent divergent petals alters, which, corresponding approximately to that of a rectangle, becomes that of a ruled surface whose sides cease to be parallel. In order to prevent such a distorted geometry in the slot a solution is known, by USA patent application 336,380, consisting of a dorsal bar on which is mounted a plurality of segments that can rotate around that bar. Although this solution solves the problem of sealing the slot, the set of serpents constitutes a very rough wall with a multitude of ridges transverse to the direction of the flow.

In the case of exhaust nozzles fitted with flow orientators at the outlet, the resulting system is very heavy and voluminous.

A characteristic of all the known vectoring systems for the flow is the presence of two independently acting systems, one to vary the geometry of the throat and that of the outlet axisymmetrically, and another to orientate the supporting struts at the downstream end of the divergent petals, as explained in USA patent application 336,369. Although such a exhaust nozzle has the flexibility for optimizing the law of ratios between throat area and outlet area and can accommodate itself to changes for different requirements, the system suffers from its complexity, mass and cost.

The aim of the present invention is to produce a exhaust nozzle which, having a favourable law of ratio between the area of the throat A8 and the outlet A9 throughout the whole cycle of the design of the turbine and being flexible in order to select and adjust that law, fulfils a variety of turbine cycles.

The exhaust nozzle that is the subject of this invention is of the type indicated above, with a convergent section and a divergent one, both consisting of master petals and slave petals, and which includes governing and external radial support means for regulating the throat area and governing means in order to regulate the vectoring of the thrust.

The axisymmetric exhaust nozzle of the invention is characterized by the fact that the variation of the throat area and the vectoring of the thrust are carried out by means of a single governing system.

This single system consists of three annular pieces, concentric among themselves and with the axis of the turbine, and having a plurality of linear actuators linked by their upsteam end to the structure of the turbine.

The annular pieces mentioned above are connected together and to the structure of the turbine via linkage elements and guide devices which allow the joint axial displacement of the three annular pieces in equal magnitude, with respect to the structure of the turbine, as well as a relative rotary movement of the intermediate and external annular between themselves and with respect to the internal annular piec in any direction, thereby allowing the external annular piece to be inclined in any direction with the centre of rotation in the axis of the turbine.

The convergent master petals are connected at a point in their upstream half to the internal annular piece by means of tangential cylindrical linkages with axis perpendicular to the axis of the turbine. The external annular piece is for its part connected by means of spherical linkages to the downstream end of the linear actuators mentioned above.

The master petals of the divergent section are subdivided transversely into at least two segments that are connected to each other by means of a cylindrical linkage with axis perpendicular to that of the linkage between the master petals of the convergent and divergent sections, the downstream segment being connected to the external annular ring via a strut that links to that segment by means of a spherical linkage and to the annular piece by means of a tangential cylindrical linkage with axis perpendicular to that of the turbine.

The external annular piece can either be created as a single body or it can consist of ring segments interlinked with linkages.

Creating this annular piece as a single body requires a minimum of three linear actuators in order ro vary the area of the throat A8 and to orientate the thrust: but it does not allow the area of the outlet A9 to be varied for a fixed value of the area of the throat A8.

Creating the external annular piece from two half-rings moved by four linear actuators allows the area of the outlet A9 to be varied for a fixed value of the area of the throat A8.

All the stated characteristics, as well as others that are the own of the invention, as gathered together in the patent claims, will be better understood with the following description, made with reference to the attached diagrams, which show a possible way of carrying out the invention and is to be regarded as illustrative only and no restrictive.

In the diagrams:
Figure 1 is a perspective, partially cross-section, view of a exhaust nozzle created in accordance with the invention.
Figure 2 is a transverse cross-section of the exhaust nozzle along the cutting line A-A of figure 9, in order to show the links between the elements making up the simultaneous governing system for the throat area and the vectoring of the thrust.
Figure 3 is a longitudinal cross-section of the exhaust nozzle along the cutting line B-B of figure 2, showing the exhaust nozzle in its open position and without vectoring of the thrust.
Figure 4 is a longitudinal cross-section of the exhaust nozzle along the cutting line B-B of figure 2, showing the exhaust nozzle in its open position and with vectoring of the thrust.
Figure 5 is a cross-section similar to figure 4, with the exhaust nozzle in the closed position and without vectoring of the thrust.
Figure 6 is a cross-section similar to figure 4, with the exhaust nozzle in the closed position and with vectoring of the thrust.
Figure 7 is a longitudinal cross-section of the exhaust nozzle, along the cutting line C-C of figure 2, with the exhaust nozzle in the closed position and without vectoring of the thrust.
Figure 8 is a longitudinal cross-section of the exhaust nozzle, along the cutting line D-D of figure 2, with the exhaust nozzle in the open position and without vectoring of the thrust.
Figure 9 is a longitudinal cross-section of the exhaust nozzle, along the cutting line E-E of figure 2, with the exhaust nozzle in the closed position and without vectoring of the thrust.
Figure 10 is a longitudinal cross-section of the exhaust nozzle, along the cutting line F-F of figure 2, with the exhaust nozzle in the closed position and without vectoring of the thrust.
Figure 11 is a longitudinal cross-section of the exhaust nozzle, taken along the cutting line A-A of figure 15, showing an alternative form of carrying out the invention with respect to figure 2.
Figure 12 is a longitudinal cross-section of the exhaust nozzle, along the cutting line B-B of figure 11, with the exhaust nozzle in the closed position and without vectoring of the thrust.
Figure 13 is a longitudinal cross-section of the exhaust nozzle, along the cutting line C-C of figure 11, with the exhaust nozzle in the open position and without vectoring of the thrust.
Figure 14 is a longitudinal cross-section of the exhaust nozzle, along the cutting line D-D of figure 11, with the exhaust nozzle in the open position and without vectoring of the thrust.
Figure 15 is a longitudinal cross-section of the exhaust nozzle, along the cutting line E-E of figure 11, with the exhaust nozzle in the closed position and without vectoring of the thrust.
Figure 16 is a longitudinal cross-section of the exhaust nozzle, along the cutting line F-F of figure 11, with the exhaust nozzle in the open position aid without vectoring of the thrust.
Figure 17 is a longitudinal cross-section similar to figure 16, showing an alternative and with the exhaust nozzle in the open position and without vectoring of the thrust.
Figure 18 is a similar view to figure 17, with the exhaust nozzle in the closed position and without vectoring of the thrust.
Figure 19 is a longitudinal cross-section of the exhaust nozzle, along the cutting line C-C, showing the alternative of figure 17, with the exhaust nozzle in the closed position and without vectoring of the thrust.
Figures 20 and 21 are cross-sections similar to figure 16, showing further alternative designs, with the exhaust nozzle in the open position and without vectoring of the thrust.
Figure 22 is a similar view to figure 21 with the exhaust nozzle in the closed position and without vectoring of the thrust.
Figure 23 is a longitudinal cross-section of the exhaust nozzle, along the cutting line F-F of figure 2, showing an alternative design in terms of the annular pieces, with the exhaust nozzle in the open position and without vectoring of the thrust.
Figure 24 is a similar cross-section to figure 23, with the exhaust nozzle in the closed position and without vectoring of the thrust.
Figure 25 is a transverse cross-section, similar to figure 11, showing an alternative way of designing the annular pieces.
Figure 26 is an exterior plan view of a divergent master petal.
Figure 27 is a side elevation view of the petal in figure 26.
Figure 28 is a rear perspective of a divergent slave petal.
Figure 29 is a plan view of the petal of figure 28.
Figure 30 is a cross-section, on a larger scale, along the cutting line Z-Z of figure 29.
Figure 31 shows in rear perspective a variation in the design of a divergent slave petal.
Figure 32 is a plan view of the divergent slave petal of figure 31.
Figure 33 is a cross-section, on a larger scale, along the cutting line Z-Z of figure 32.
Figures 34 and 35 are rear views of the exhaust nozzle, without vectoring and with vectoring of the thrust and with the slave petals represented in figures 28 to 30.
Figures 36 and 37 show similar views to those of figures 34 and 35, with the slave petals of figures 31 to 33.

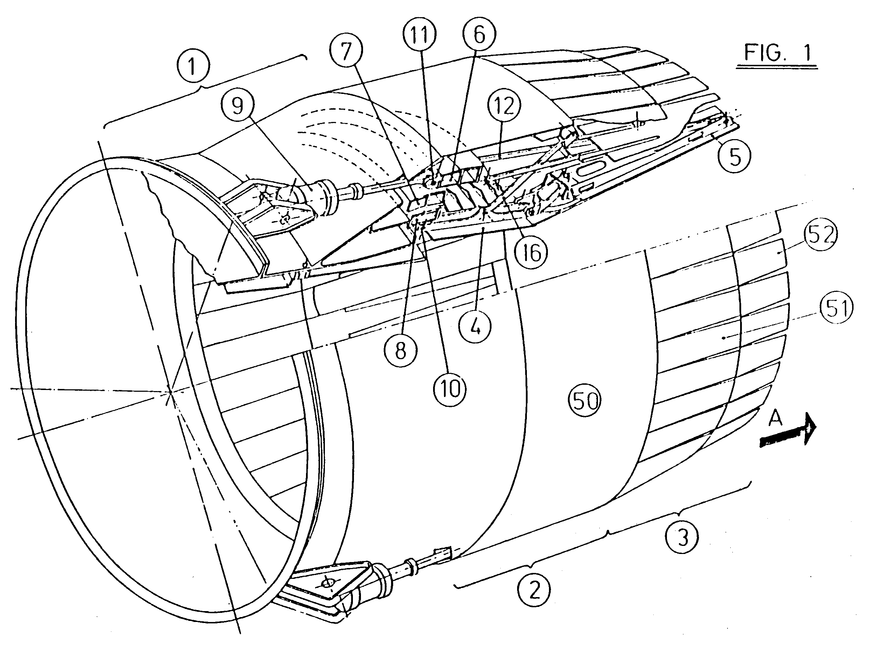

Figure 1 represents, in a diagrammatic and partially cross-sectional perspective view, a exhaust nozzle created in accordance with the invention, with arrow A showing the direction of the flow or circulation of the gases. As with traditional exhaust nozzles, the one represented in figure 1 includes a rear housing referenced with number 1, a convergent section referenced with number 2 and a divergent section referenced with number 3. The convergent section 2 consists of a plurality of master petals referenced with number 4 and slave petals which are not represented. In the same way, the divergent section 3 is designed on the basis of master petals 5 and slave petals which are not shown. The exhaust nozzle also includes a governing system for the throat area A8, defined by the intersection between the convergent petals 4 and the divergent petals 5, and for the vectoring of the thrust.

In accordance with this invention, the variation in the throat area and the vectoring of the thrust is done by means of a single governing system consisting of three annular pieces 6, 7 and 8, concentric among themselves and with the axis of the turbine, and by a plurality of linear actuators 9 which are linked by their upstream ends to the structure of the housing 1.

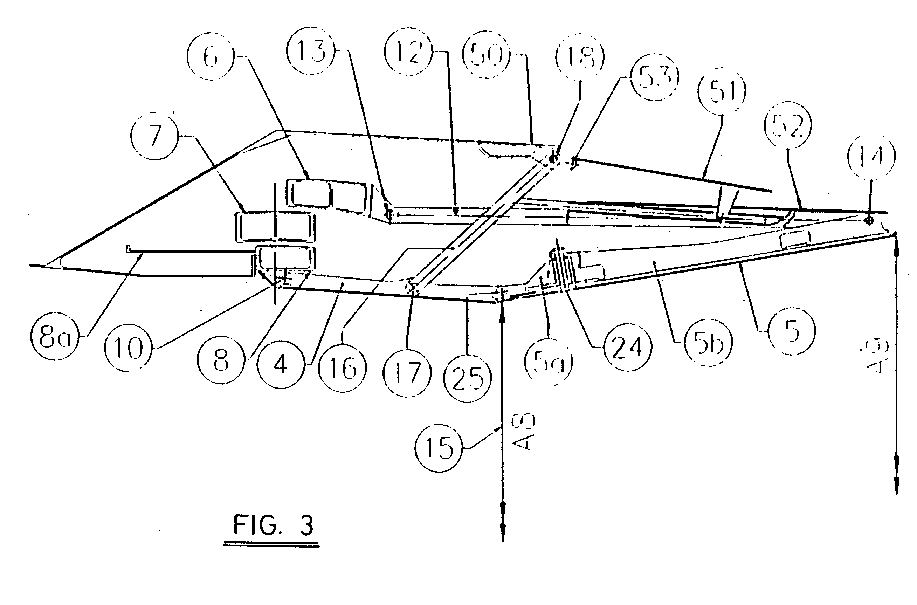

The convergent master petals 4 are connected at a point in their upstream half to the internal annular piece 8. In the example shown in figure 3 these convergent master petals 4 are connected by their upstream ends to the internal annular piece 8. This connection is made by means of tangential cylindrical linkages 10, with axis perpendicular to that of the turbine.

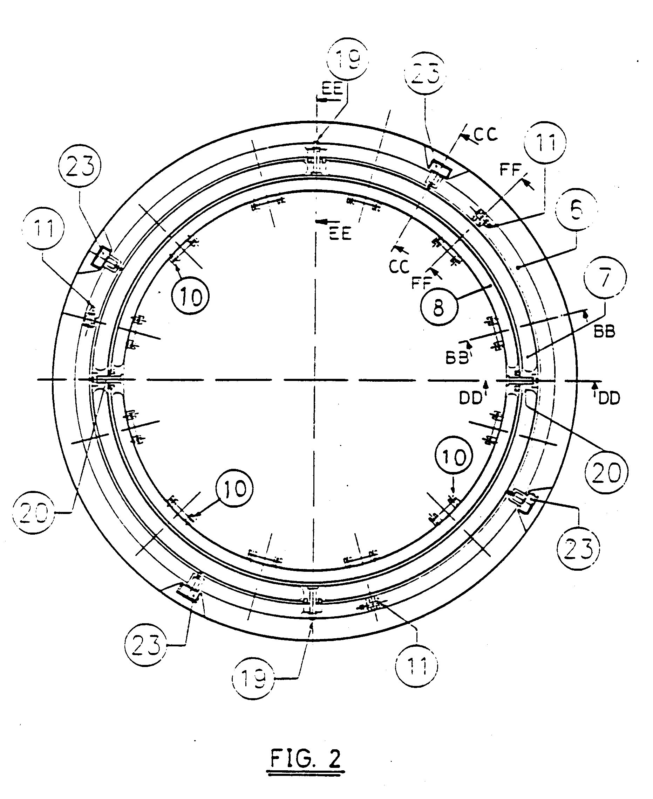

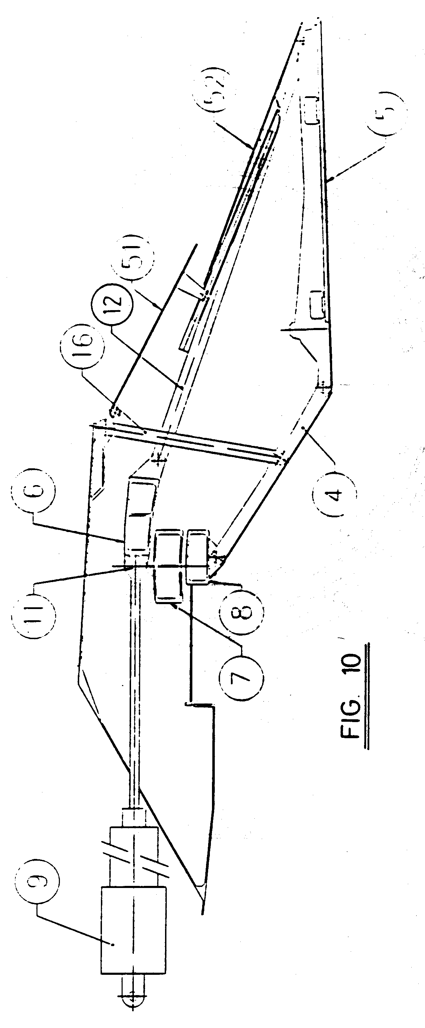

Connected to the external annular piece 6 by means of spherical linkages 11, figures 2 and 10, are the downstream ends of the linear actuators 9. The external annular piece 6 is also linked to the divergent master petals 5 by struts 12 mounted concentrically around the axis of the turbine. The connection of the struts 12 to the external annular piece 6 is carried out via a cylindrical linkage 13, while the connection to the divergent master petal 5 is made via a spherical linkage 14.

The governing system for the exhaust nozzle also, includes a mechanism for modifying the throat area A8 which is referenced with number 15, mechanism which, in the way in which it has been designed in figure 3, consists of a connecting rod 16 connected at one end by means of a linkage 17 to the convergent master petal 4, while at the opposite end via the linkage 18 it is connected to the fixed structure of the cover of the exhaust nozzle.

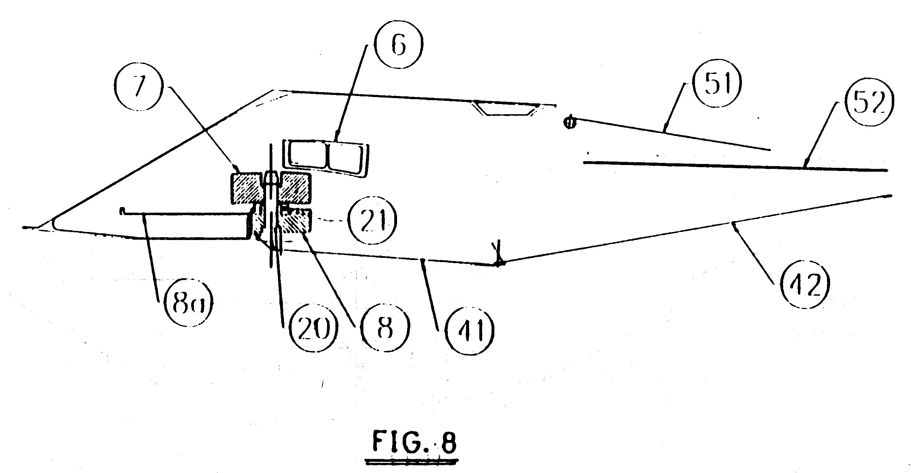

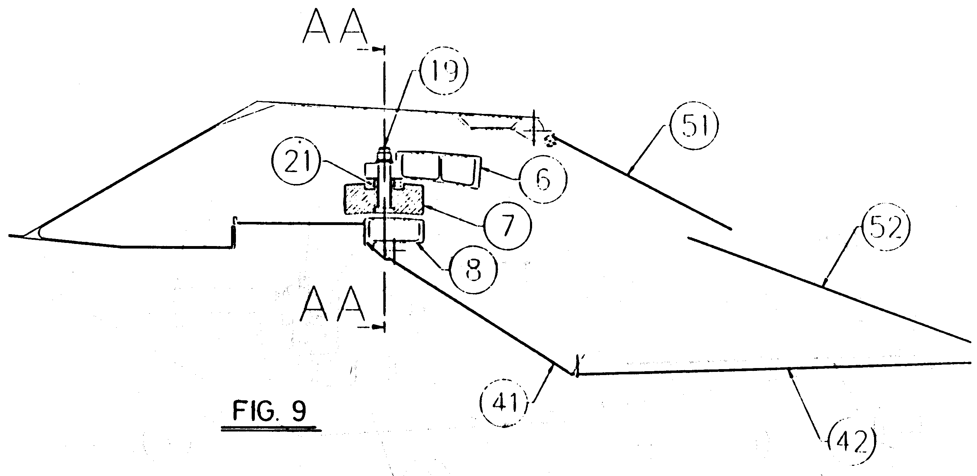

The annular pieces 6, 7 and 8 are also linked to each other by devices that allow axial displacement of the set of three pieces, in equal magnitude, with respect to the structure of the turbine, as well as a relative rotary movement of the intermediate 7 and external 6 annular pieces between themselves and with respect to the internal annular piece 8 in any direction, in such a way that allows the external annular piece 6 to incline in any direction, with the centre of rotation being the axis of the turbine. In this way the external annular piece 6 and internal ones 8 between them and via the intermediate annular piece 7 allow a relative rotational movement in the space, defining a spherical joint. For this, the annular pieces 6 and 7 are joined together by a cylindrical linkage defined by the shafts 19, figures 2 and 9,aligned in a diametrically opposite position, while the annular pieces 7 and 8 are joined together by another cylindrical linkage defined by the shafts 20, figures 2 and 8, also aligned one with the other in a diametrical position perpendicular to the shafts 19.

With the aim of reducing the clearances between the annular pieces 6, 7 and 8 and minimizing friction between them during their relative rotation, some axial thrust bearings, referenced with number 21 in figures 8 and 9, are arranged concentrically with the shafts 19 and 20.

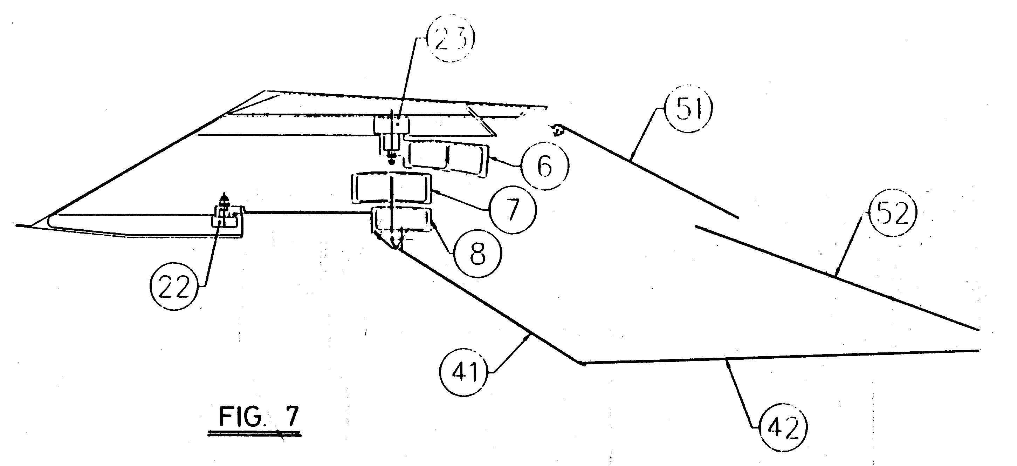

As can be seen in figures 3 to 16, the internal annular piece 8 has a cylindrical extension 8a, by means of which the post-combustor is sealed during adjustment of the throat area 15 of the exhaust nozzle. The axis of this cylindrical extension must always be located above the longitudinal axis of the turbine, for which it will have a minimum of three rollers 22, figure 7, outside the plane of the spherical joint, and which will move solely in the axial direction inside some guides fixed to the structure of the turbine, in order to define the guide device for the internal annular piece 8.

For its part, the external annular piece 6 is guided by a device consisting of a minimum of three rollers 23, figures 2, 7, 11, 13 and 19, which can move only in the axial direction inside some guides fixed to the structure, with a small clearance to allow rotation of this external annular piece 6 over any diameter.

The guides for the annular pieces 6 and 8 will have to absorb the effects of net shear that might appear during the vectoring of the thrust and caused by asymmetries of the loads.

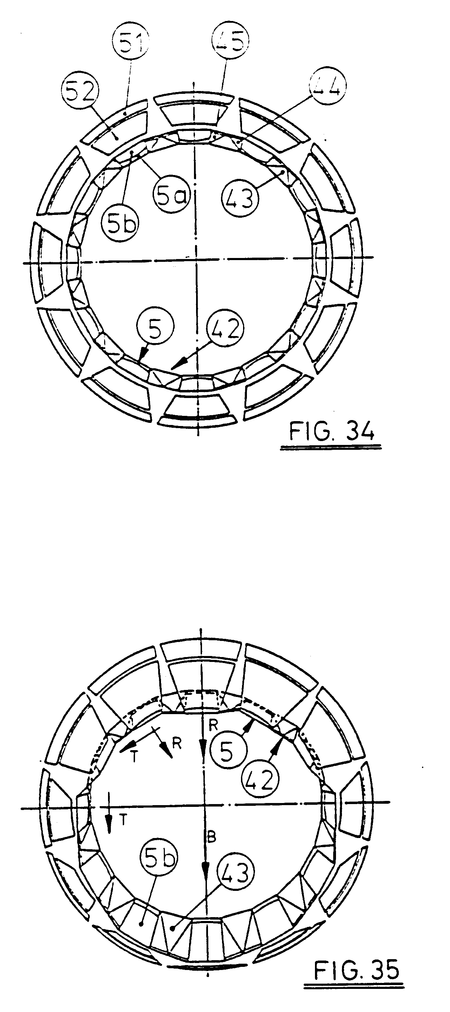

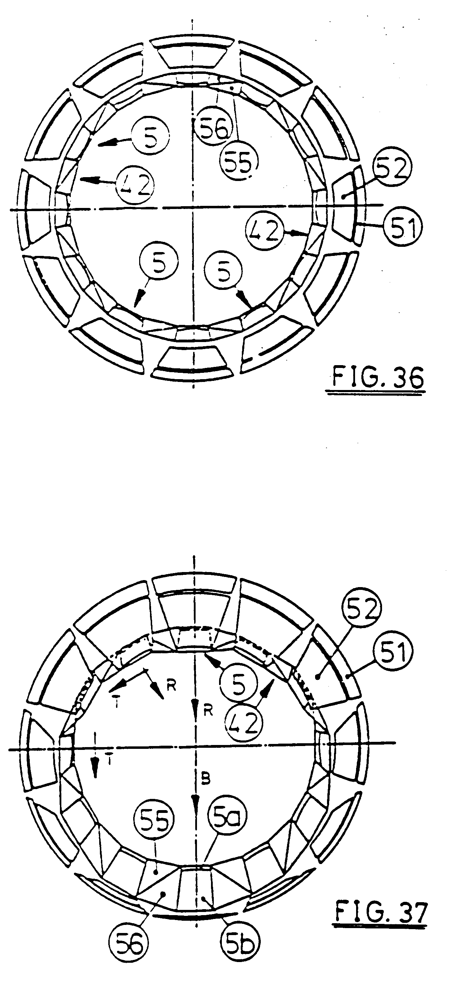

The device described, represented in figures 2 to 10, allows the following movements by means of activating the linear actuators 9 in one direction or the other:
- Axial movement of the set of annular pieces 6, 7 and 8 together with the struts 12 and the petals 4,allowing variation of the throat area A8, referenced with number 15 in figure 3. The displacement of the annular pieces 6, 7 and 8 by the action of the linear actuators 9 causes the radial displacement of the convergent master petals 4 via the linkage 10. Due to the fixed structure and by means of the connecting rod 16, these convergent master petals 4 open or close in the radial direction, defining with the struts 12 the position of the divergent master petals 5. In this case the three linear actuators 9 will always have the same length.
- Each of the actuators 9 can be lengthened or shortened in such a way that the external annular piece 6 moves on a spherical surface, with its centre in the turbine axis, the annular piece 8 remaining fixed in an axial position and thereby achieving via the same mechanisms the vectoring of the thrust in any direction around the axis of the turbine. In the operation indicated the struts 12, which are joined via a cylindrical linkage to the external annular piece 6, rotate with it and force the divergent master petals 5 to move in the radial direction, this movement being indicated with an arrow R in figures 35 and 37, and in the tangencial direction, a movement referenced with the arrow T in the same figures 35 and 37, thereby allowing the vectoring of the thrust to be achieved in the direction indicated by arrow B.

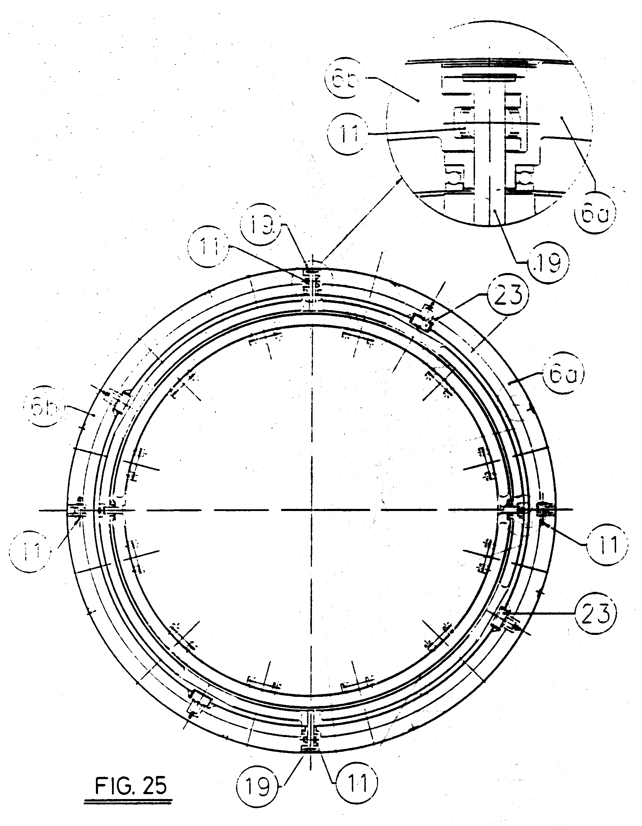

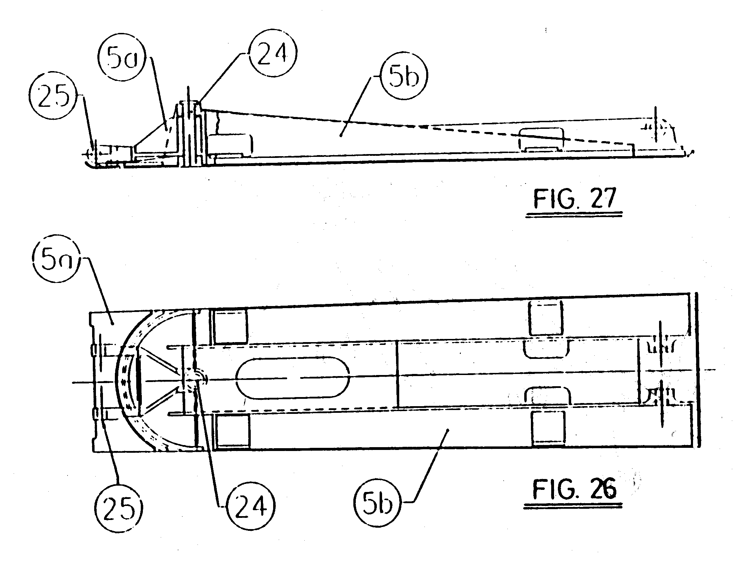

The radial and tangential movements of the divergent master petal 5 can be achieved by linking that petal to the convergent petal 4 via a spherical linkage, as described in british patent 2230239A. in accordance with the present invention, the same effect can be achieved by transversely subdividing each master petal 5 into two segments, referenced with numbers 5a and 5b, joined together by means of a cylindrical linkage arranged in the perpendicular direction to the base of the petal, as can be seen better in figures 26 and 27. The segment 5a is joined via a cylindrical linkage 25 to the master petal 4, figures 3, 26 and 27. With this solution the problem of sealing the throat area 15 is solved in the simplest way since, during the vectoring of the thrust, both segments 5a and 5b move in a radial direction, but segment 5a is prevented from moving in the tangential direction, with just element 5b being able to move in that direction. Vectoring of the thrust has indeed been achieved, as will be explained below.
- The external annular piece 6 can be divided diametrically into two half-rings, referenced with numbers 6a and 6b, connected together by means of the same elements that shape the cylindrical linkages 19, as can be seen in figure 25. The linear actuators 9 that connect to these cylindrical linkages 19 will remain fixed in terms of length, those that are secured to the mid-point of the half-rings 6a and 6b being shortened or lengthened by the same amount in order to vary the outlet area A9 of the exhaust nozzle for a given throat area A8, since the struts 12 open or close the divergent master petals 5.

The three possibilities of movement mentioned above can be carried out simultaneously with suitable adjustment of the run of the linear actuators 9.

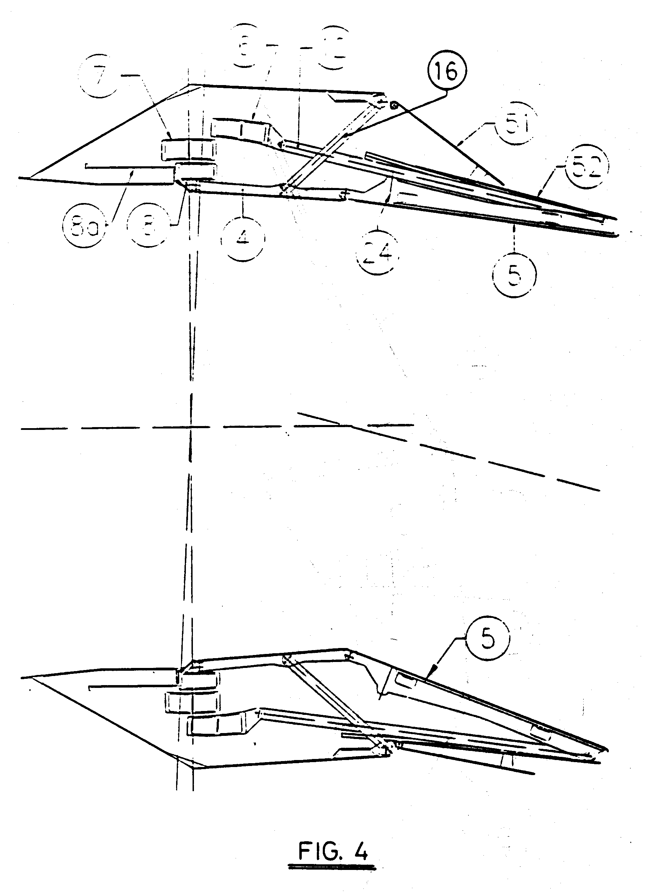

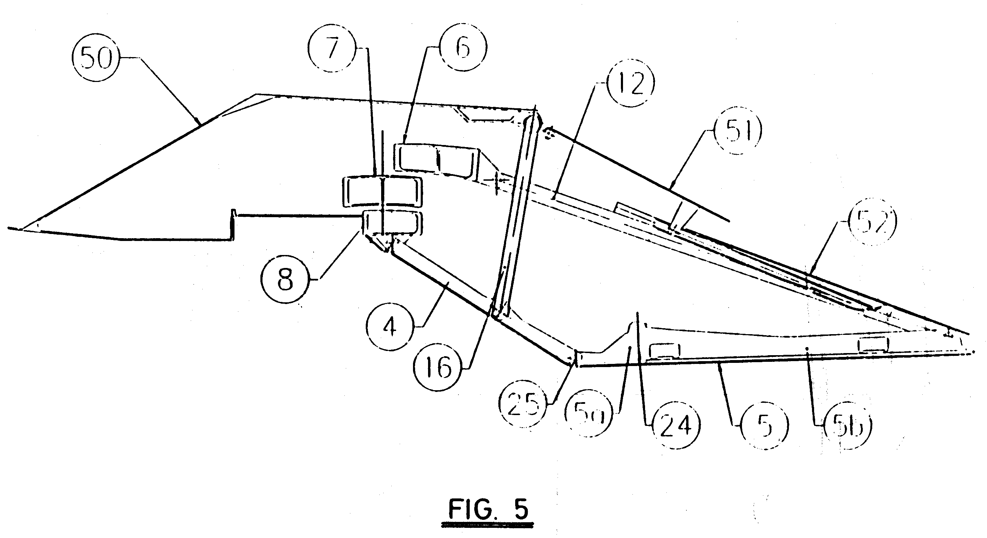

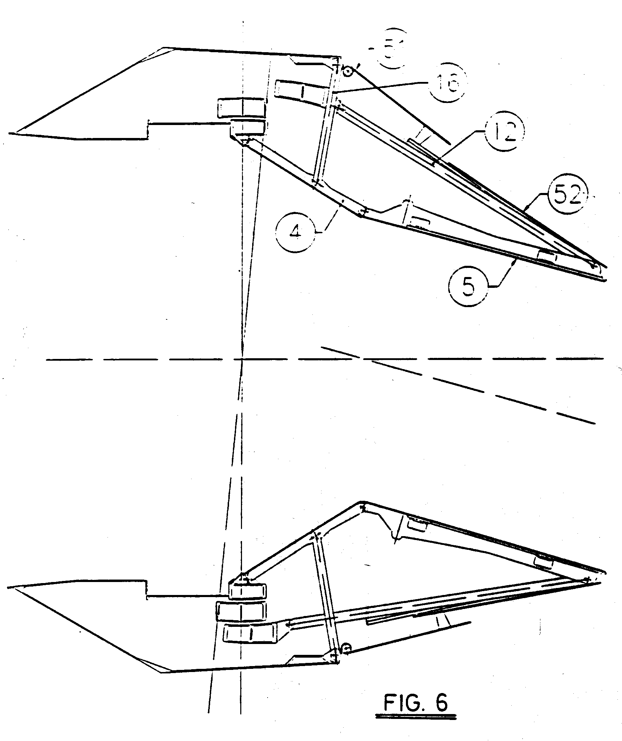

Figure 3 shows the exhaust nozzle in the open position and without vectoring of the thrust, while figure 4 shows the same longitudinal cross-section of the exhaust nozzle but in the open position and with vectoring of the thrust. Figure 5 is a cross-section coinciding with figure 3, showing the exhaust nozzle in the closed position and without vectoring of the thrust, while figure 6, which corresponds to the same cross-section of the exhaust nozzle, shows it in the closed position but with vectoring of the thrust. These figures show the relative positions of the different components as the exhaust nozzle goes from the open to the closed position with or without vectoring of the thrust.

Figure 7, which shows the exhaust nozzle in the position coinciding with that represented in figure 5, shows the bearings or rollers 22 and 23 that can be displaced on longitudinal guides in order to axially displace the annular pieces 6, 7 and 8. These bearings or rollers can form part of the annular pieces and the guides, throughout the length that they have to slide through, form part of the turbine structure or, on the other hand, the guides can form part of the annular pieces and the rollers 22 and 23 be mounted on the turbine structure.

Figure 8 represents one of the cylindrical linkages 20 that connect the intermediate annular piece 7 to the internal one 8.

Figure 9, which shows a position coincident with that of figure 5, represents one of the cylindrical linkages 19 connecting the external annular piece 6 to the intermediate annular 7.Figure 10, in which the nozzle also occupies a position coincident with that of figure 5, shows the connection 11 between one of the actuators 9 and the external annular piece 6.

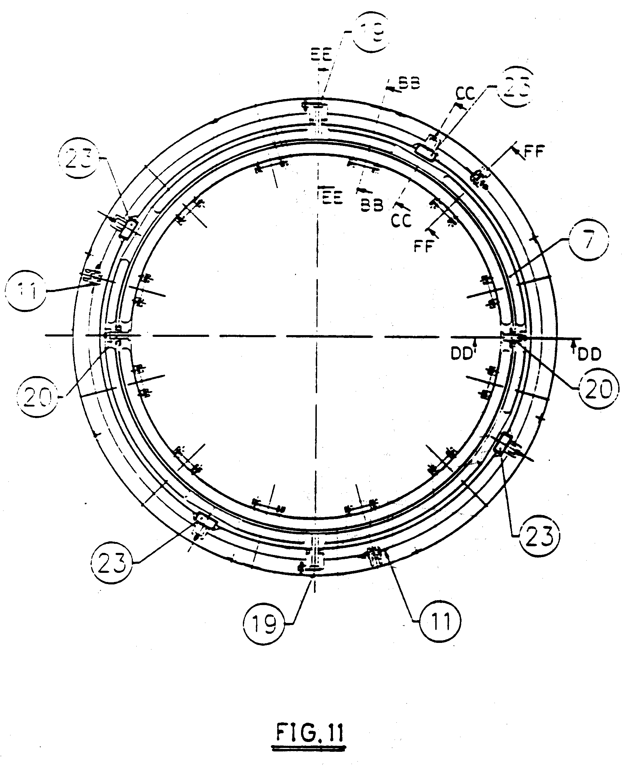

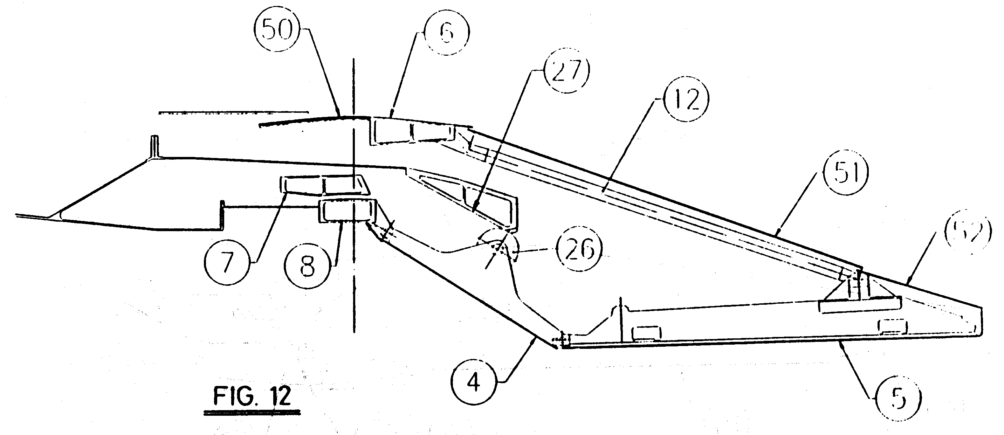

Figures 11 to 16 show a variation in the design in which the mechanism for modifying the throat area A8 consists of a roller 26 and a cam 27 that support each other. In the design shown in figures 12 to 16 the roller 26 is mounted on the convergent master petal 4 so that it can freely rotate while the cam 27 is integral with the structure of the turbine.

Nevertheless, as an alternative, the roller 26 could be mounted on the turbine structure, with the cam 27 formed in the facing surface of the convergent master petal 4.

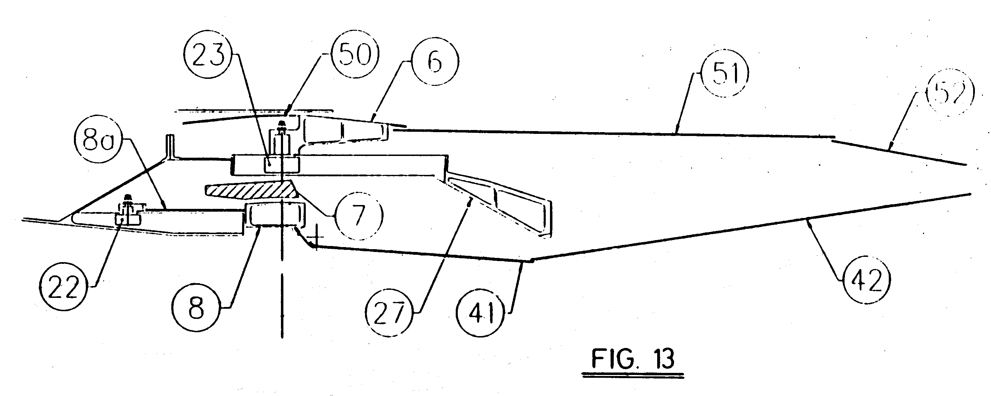

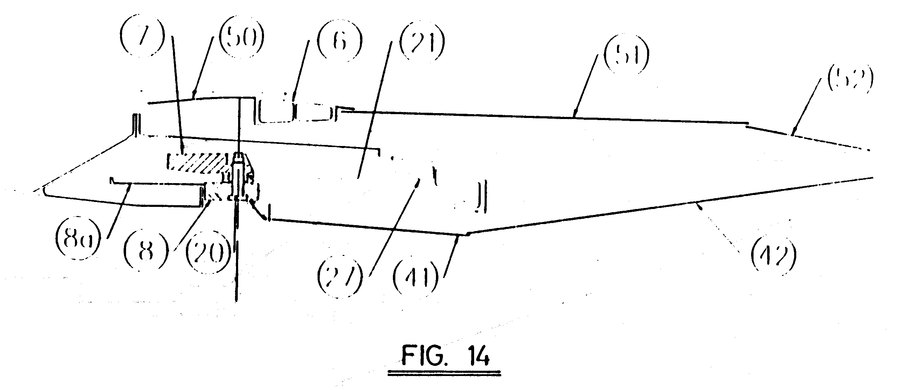

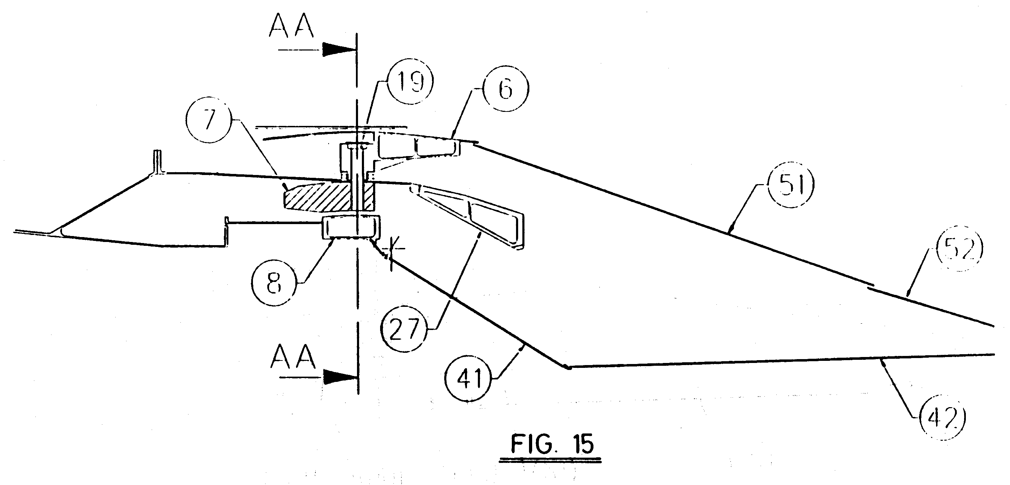

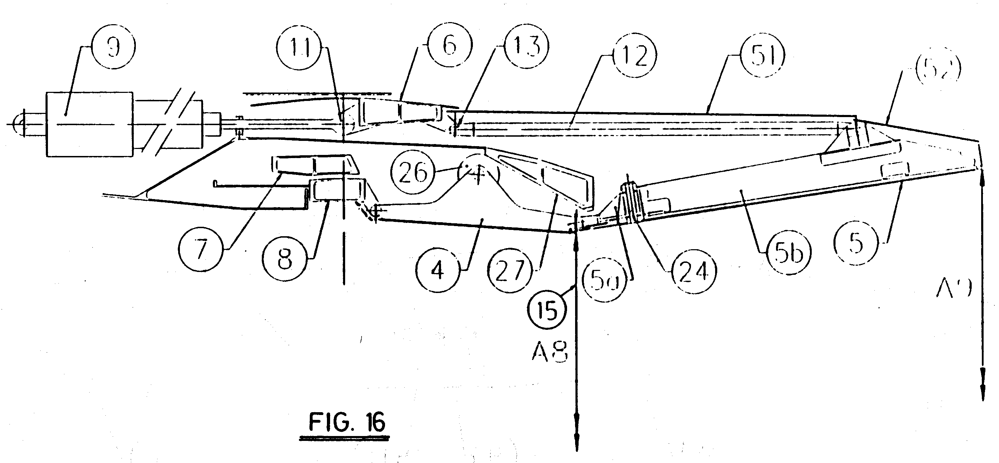

Otherwise, the arrangement and operation of the exhaust nozzle is the same as that described with reference to figures 1 to 10. Figure 12 represents the exhaust nozzle in the closed position, without vectoring of the thrust, showing the connection between the struts 12 and the external annular piece 6, on one hand, and with the divergent master petal 5, on the other one. Figure 15 represents a position of the exhaust nozzle coincident with that of figure 12, showing one of the cylindrical linkages 19 joining the external annular piece 6 to the intermediate annular piece 7,as shown in figure 11. Figures 13 and 14 show the exhaust nozzle in the open position and without vectoring of the thrust, figure 13 including the rollers 22 and 23 that guide the axial displacement of the set of annular pieces 6, 7 and 8, while figure 14 includes the cylindrical linkage 20 between the annular pieces 7 and 8. Figure 16 also shows the exhaust nozzle in the open position and without vectoring of the thrust, including the connection point between one of the actuators 9 and the external annular piece 6.

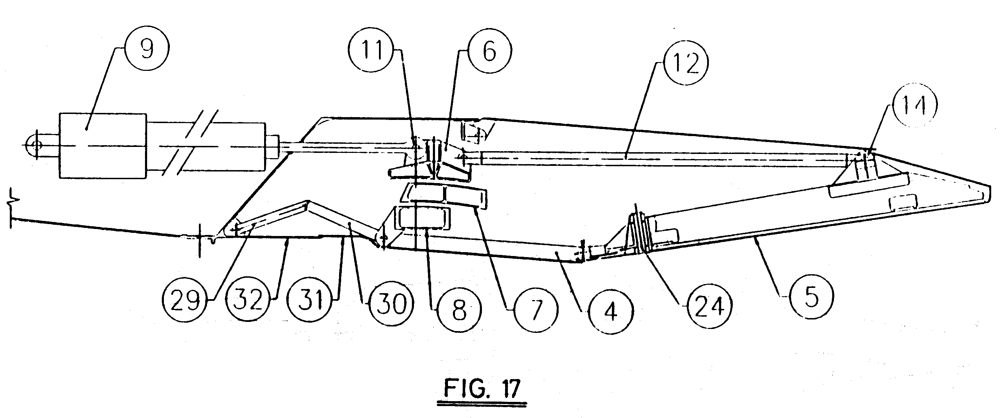

Figures 17 to 19 show a new system or mechanism for modifying the throat area A8, consisting of a connecting rod 29 that is linked by its upstream end to the turbine structure while its downstream end is linked to an extension 30 of the convergent master petal 4. As it moves,the internal annular piece 8 pulls the cylindrical shell 31, which partially overlaps with the cylindrical shell 32 foxed to the turbine structure, in such a way that gas leaks are prevented, as represented in figures 17, 18 and 19.

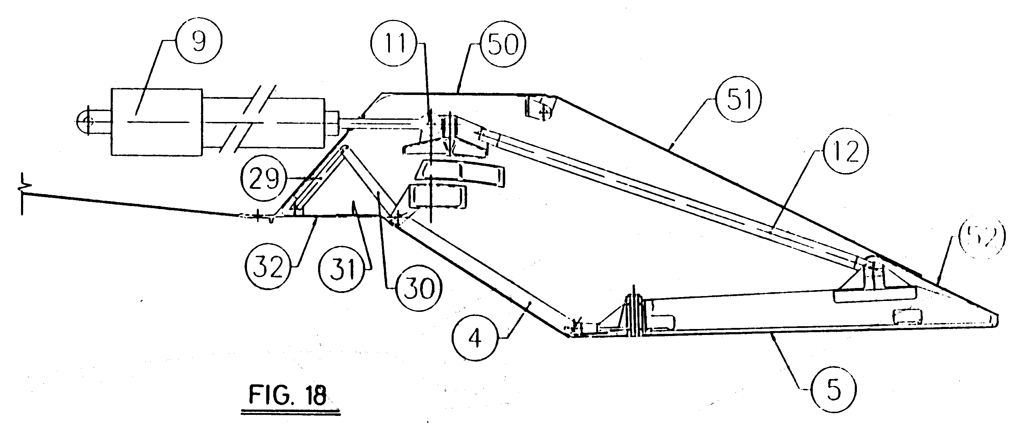

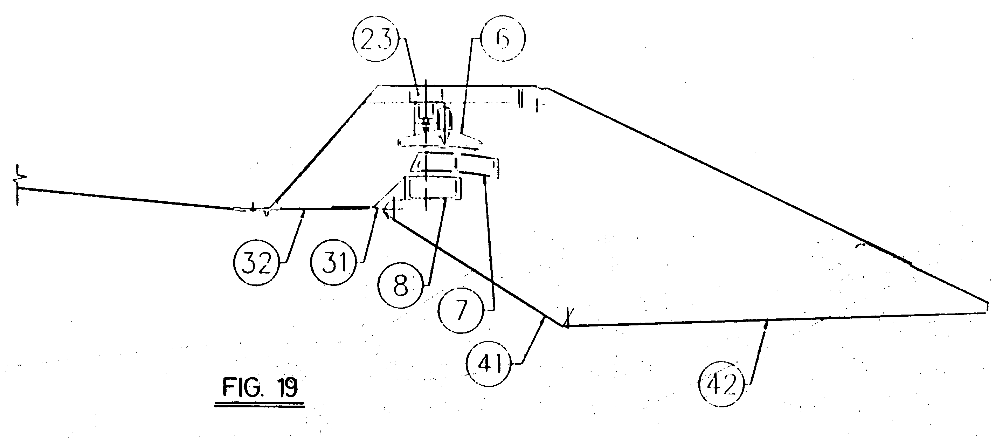

Otherwise, figures 17 and 18 correspond to longitudinal cross-sections of the exhaust nozzle in the open and closed positions, showing the connection point of one of the actuators 9 with the external annular piece 6, while figure 19 corresponds to a longitudinal cross-section of the exhaust nozzle in the closed position, showing the roller 23 that will act as a guide for the axial displacement of the annular pieces 6, 7 and 8.

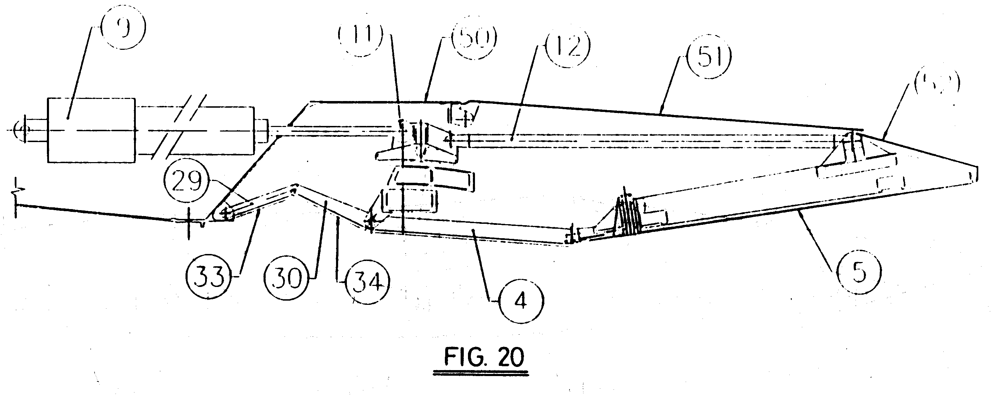

Figure 20 represents a variation of figures 17 to 19, in which both the extension 30 of the petal 4 and the connecting rod 29 make the master 33 and 34 and the interstices between them are sealed by means of partially overlapping slave petals (not represented). Otherwise, figure 20 coincides with figure 17.

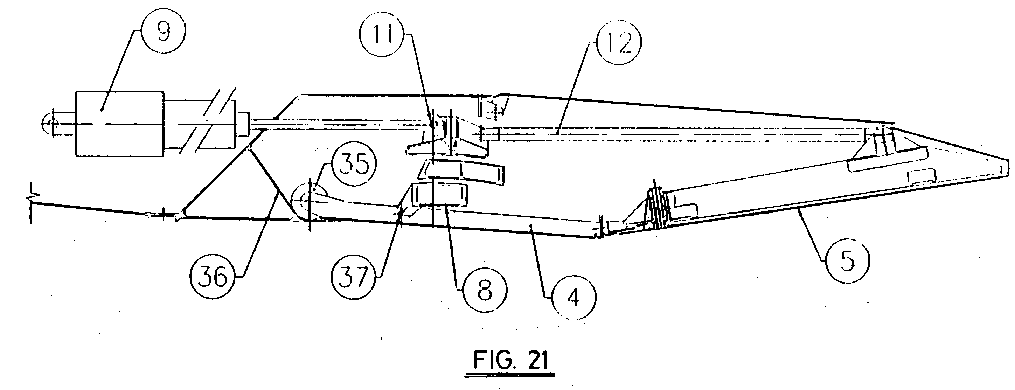

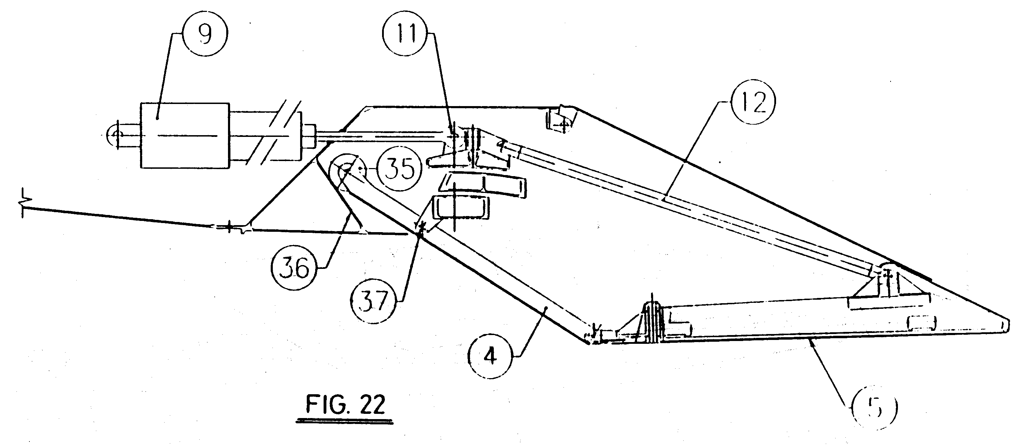

Figures 21 and 22 show yet another mechanism for modifying the throat area A8, consisting of a roller 35 linked to the upstream end of the convergent master petal 4. This roller is supported on a cam 36 formed in the turbine structure. The internal annular piece 8 connects to an intermediate point of the petal 4 via a cylindrical linkage 37. Figure 21 shows the exhaust nozzle in the open position and without vectoring of the thrust, while figure 22 shows the exhaust nozzle in the closed position, also without vectoring of the thrust.

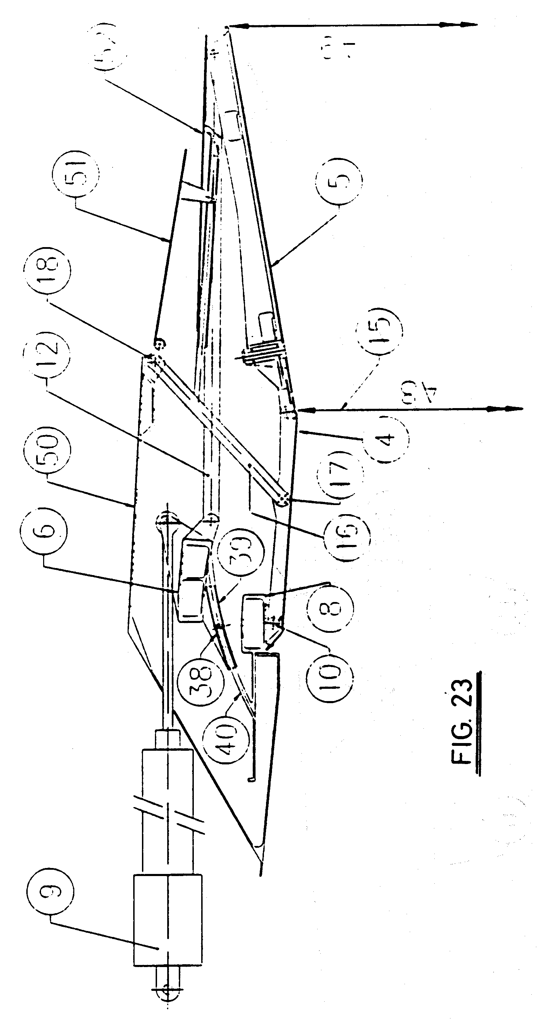

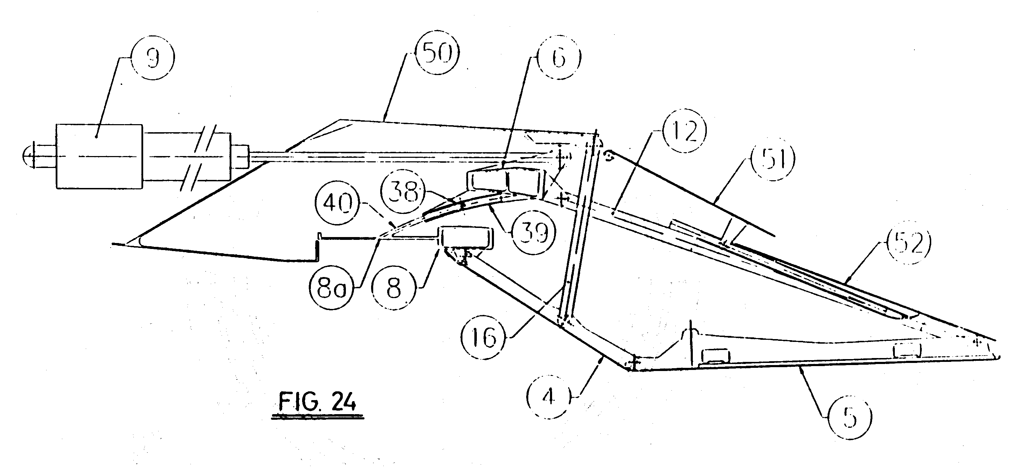

In the design shown in figures 23 and 24, the intermediate annular piece consists of three concentric spherical segments, referenced with numbers 38, 39 and 40 which radially support each other and which have the outer ones, referenced with numbers 38 and 39, linked to the external annular piece 6 while the intermediate one, referenced with number 40, is linked to the internal annular piece 8, the whole defining a spherical linkage with simple symmetry. Otherwise, figures 23 and 24 correspond to a cross-section and design similar to that of figure 10, with the exhaust nozzle open and closed, without vectoring of the thrust.

Figures 2 to 24 show the external annular piece designed as a single body.

Figure 25 shows in greater detail a transverse cross-section, similar to figure 11, with the two half-rings 6a and 6b making up the external annular piece, connected by means of cylindrical linkages 19, an alternative that, as explained above, allows the outlet area A9 to be varied for a given throat area A8 by means of ovalizing that area A9.

As stated above, figures 26 and 27 show one of the divergent master petals 5 in plan and side elevation.

As previously stated, the sealing between the convergent master petals and between the divergent master petals is done by means of the corresponding convergent 41 and divergent 42 slave petals, as shown and referenced in figures 7, 8, 9, 13, 14, 15 and 19.

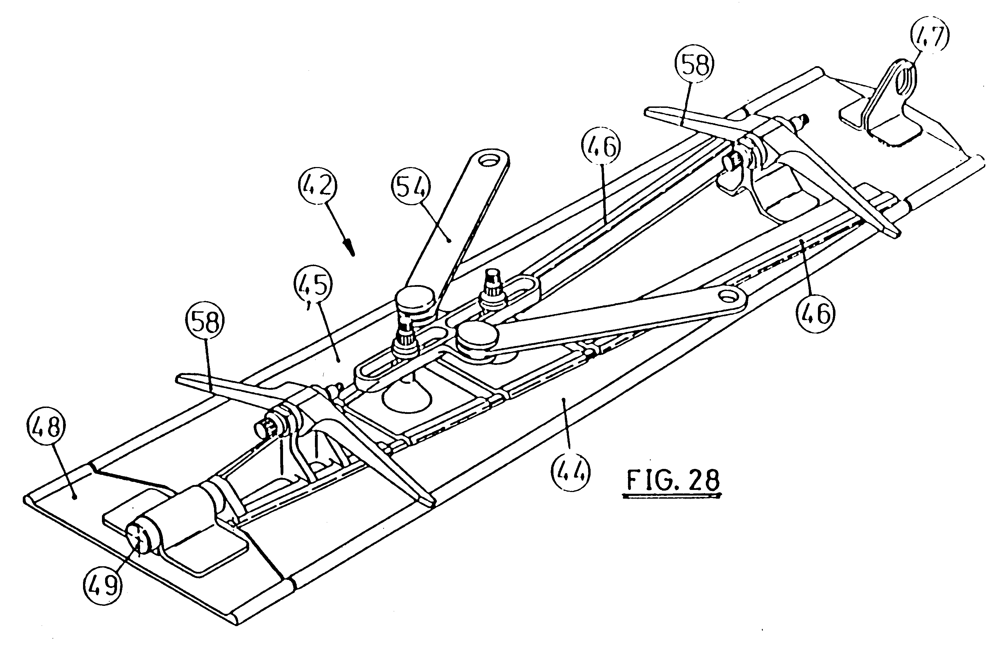

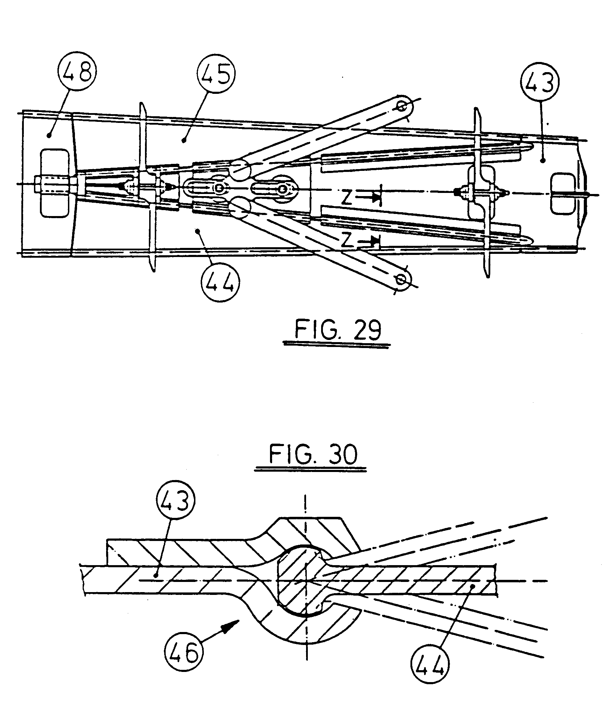

In order to be adapted to the divergent master petals 5, consisting of segments 5a and 5b and to resolve the problem of sealing the interstice existing between adjacent petals, it is proposed to resort to a foldable plate provided with hinged linkages in each of its folds, the freedom of rotation of that linkage being limited but sufficient so that the different components of that plate can adapt themselves to the configuration of maximum distorsion of the geometry of that interstice. Figures 28 to 30 represent a possible design for these divergent slave petals 42. The petal consists of three approximately plane pieces, one central 43 with an approximately trapezoid outline, and two side pieces referenced with numbers 44 and 45, both the same and which are linked to the central piece via cylindrical bearings 46. The central piece 43 ends at its upstream side in a flare directly supported on the divergent master petals and has a lug 47 for connection to the slave petals of the convergent section. Via its downstream end this central piece 43 is connected to a flat end piece 48 by means of a cylindrical bearing 49 parallel to the axis of the turbine. With this arrangement, the asymmetric radial movement undergone by the divergent master petals during vectoring of the thrust will be absorbed by the independent rotation of the pieces 44 and 45.

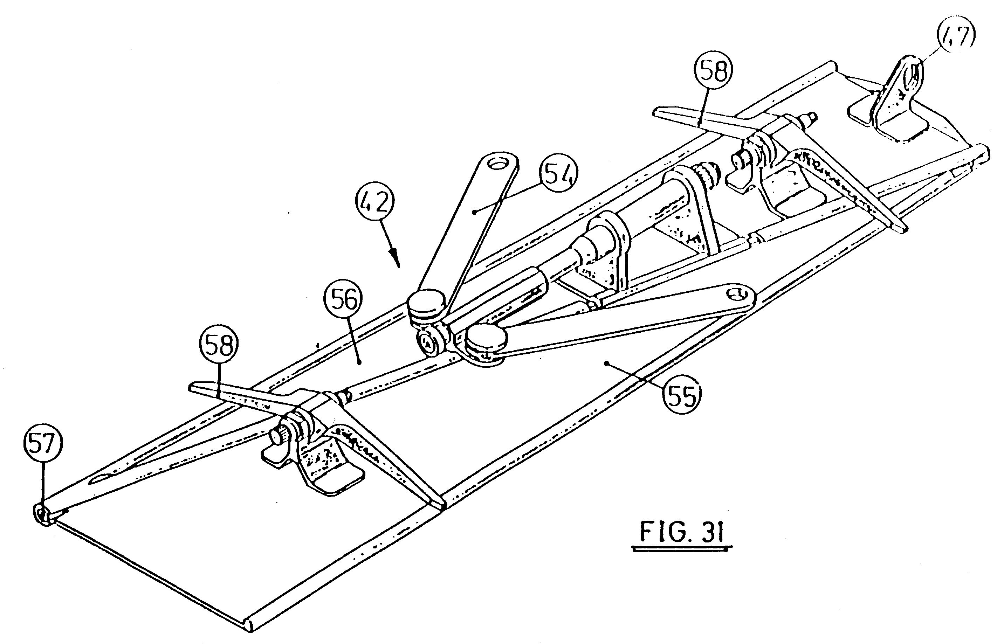

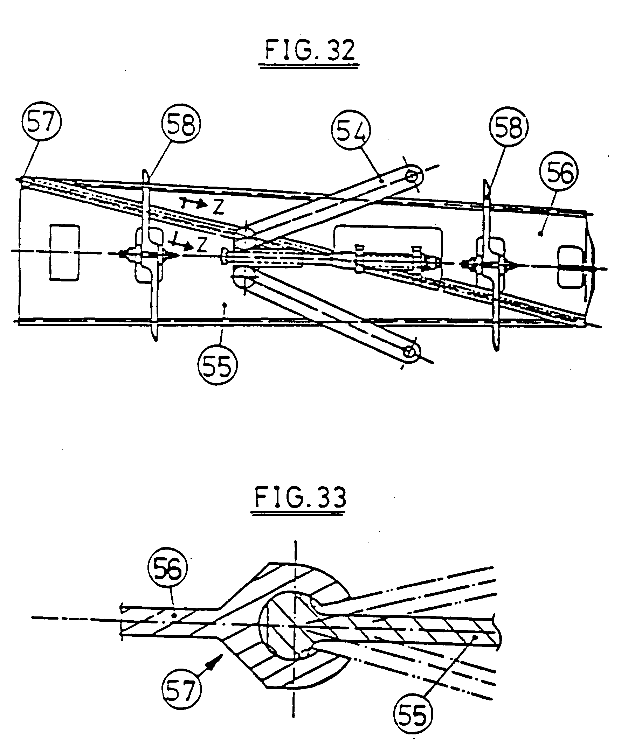

A variation in the design is shown in figures 31 to 33, in which the divergent slave petals 42 consist of two flat triangular pieces, referenced with numbers 55 and 56, joined together via a cylindrical bearing 57 located on the diagonal of the flat surface defined by the two pieces, in such a way that they can adopt different angles in order to adapt themselves to the asymmetric movement of the divergent master petals during vectoring of the thrust.

In both variations the usual support and guidance systems are provided for, consisting of pincers or hangers 58 that will support on the master petals and of a centralizing mechanism 54.

Figure 34 shows a rear view of the exhaust nozzle without vectoring, in which the sealing between the divergent master petals is done by the slave petals shown in figures 28 to 30. Figure 35 is a similar view to figure 34, with vectoring of the thrust in the direction of the arrow B. For their part, figures 36 and 37 are similar views to those of figures 34 and 35, but using the divergent slave petals of figures 31 to 33.

Returning to figure 1, the exhaust nozzle includes, around the convergent section 2, a cover 50 and around the divergent section a cover consisting of elements 51 and 52. In the examples shown in figures 3 to 10, the elements 51 are linked by means of spherical linkages 53 to the fixed structure and guided by the struts 12, while the elements 52 are rigidly linked to those struts 12. In the manner represented in figures 12 to 16, the elements 51 are rigidly linked to the struts 12, while the elements 52 are rigidly linked to the divergent master petals 5, the cover 50 being rigidly linked to the external annular piece 6.

In place of the rolling elements 22 the guide for the internal annular piece 8 can be made with a minimum of three cylindrical pins, linked by one end to the extension 8a of the said internal annular piec 8 and which would be displaced in the direction of the turbine axis inside cylindrically shaped guides fixed to the facing surface of the turbine structure.

In the designs described where the external radial support means for the convergent petals 4 consist of a two-hinged connecting rod 16, the linkage 10 between that petal and the internal annular piece 8 can be spherical or cylindrical. In the same way, the linkages 17 and 18 of the ends of the connecting rod 16 can be spherical or cylindrical, so long as the linkages 10, 17 and 18 are cylindrical.

The half-rings 6a and 6b making up the external annular piece, in the alternative shown in figure 25, can be joined by a cylindrical linkage consisting of two cylindrical bearings located on a diameter of the turbine and at opposite ends. These half-rings can also be joined by a cylindrical linkage consisting of two spherical bearings located on a diameter of the turbine and at opposite ends. In all cases where the external annular piece is made up of two half-rings, the simultaneous governing system for the throat area and thrust vectoring will include a minimum of four linear actuators 9. These four actuators will be consecutively located at 90° to each other, two of them coinciding with the cylindrical linkage bearings.

Each of the half-rings making up the external annular piece may be made up of a plurality of ring segments joined together by cylindrical linkages arranged in a radial direction and guided by the fixed structure. These ring segments may be joined together by spherical linkages and guided by the fixed structure.

The characteristics described allow the following advantages to be obtained:
- An axisymmetric convergent-divergent exhaust nozzle with variable geometry and the possibility of thrust vectoring and regulation of the outlet area A9 (in the alternative of the annular piece 6 represented in figure 25), easily adaptable to existing turbines.
- Reduction in the mechanical and hydraulic or pneumatic elements as there is a single system simultaneously governing the throat area A8, the outlet area A9 and the vectoring of the thrust in any direction.
- Reduction in mass.
- Simplification of the turbine control.
- No alteration of the sealing in the throat area A8, which remains as simple as in a non-vectorizable axisymmetric convergent-divergent exhaust nozzle.
- Reduced roughness of the internal surfaces of the divergent slave petals.

## Claims

1. Thrust vectoring variable geometry exhaust nozzle for gas turbines, which includes a convergent section (2) followed, in the direction of the flow, by a divergent section (3); both formed on the basis of master petals (4 and 5), joined together by means of tangencial cylindrical linkages (25) with axis perpendicular to the axis of the turbine, and slave petals (41 and 42) also joined together by means of sliding linkages; whose convergent section (2) defines a throat (15) of variable area and whose divergent section (3) has variable geometry in order to orientate the thrust in any direction on a cone located around the longitudinal axis of the turbine, including governing and external radial support means for regulating the throat area and governing means for vectoring of the thrust, characterized by the fact that the variation in the throat area (15) and the vectoring of the thrust are performed by means of a single governing system consisting, in combination, of three annular pieces (6, 7 and 8), concentric among themselves and with the axis of the turbine, and by a plurality of linear actuators (9) linked by the upstream ends to the structure (1) of the turbine; which annular pieces (6, 7 and 8) are linked together and to the structure of the turbine by means of linkage elements and guide devices that allow the joint axial displacement of the three annular pieces (6, 7 and 8) in equal magnitude with respect to the said structure, as well as a relative rotary movement of the intermediate (7) and external (6) annular pieces relative to each other and with respect to the internal annular piece (8), allowing the inclination of the external annular piece (6) in any direction, with its centre of rotation in the axis of the turbine; the convergent master petals (4) being linked at a point in their upstream half to the internal annular piece (8), while the external annular piece (6) is connected by means of spherical linkages (11) to the downstream end of the said linear actuators (9); and by the fact that the divergent master petals (5) are transversely subdivided into at least two segments (5a and 5b) joined together by means of a cylindrical linkage (24) with axis perpendicular to the linkage (25) between the master petals (4 and 5), the downstream segment (5b) being joined to the external annular pieces (6) by means of a strut (12) that is connected to that segment via a spherical linkage (14) and to the external annular piece (6) via a tangencial cylindrical linkage (13) with axis perpendicular to that of the turbine.

2. Exhaust nozzle according to claim 1, characterized by the fact that the linkage elements that connect the annular pieces together consist of two diametrical cylindrical linkages (19, 20) perpendicular to each other, one of which (20) connects the intermediate annular piece (7) to the internal annular piece (8) and the other (19) connects the intermediate annular piece (7) to the external annular piece (6).

3. Exhaust nozzle according to claim 1, characterized by the fact that intermediate annular piece (7) consist of three concentric spherical segments (38, 39 and 40), which radially support each other and of which the two outer ones (38 and 39) are linked to the external annular piece (6) and the intermediate one (40) to the internal annular piece (8) forming a spherical linkage with simple symmetry.

4. Exhaust nozzle according to claim 1, characterized by the fact that the guide devices for the annular pieces (6, 7 and 8) consist of cylindrical extensions (8a) of the internal (8) and external (6) annular pieces, pointing in the upstream direction, which overlap with facing concentric surfaces of the turbine structure, the extensions and the said facing surfaces being connected via rolling elements (22, 23) that allow a certain axial displacement of the internal (8) and external (6) annular pieces with respect to the turbine structure, and also a certain movement of the external annular piece (6) over a spherical surface centred in a point of the turbine axis.

5. Exhaust nozzle according to claim 1,characterized by the fact that the means of external radial support consist of a two-hinged connecting (16) joined at one end (18) to the fixed structure (50) of the turbine and at the other to an intermediate point (17) of the convergent master petal (4).

6. Exhaust nozzle according to claim 1, characterized by the fact that the means of external radial support consist of a fixed cam (36) located upstream with respect to the convergent section (2) and integral with the turbine structure, on which is supported, rolls, and is guided a roller (35) mounted so that it can freely rotate around the upstream end of each convergent petal (4), on the outside of those petals.

7. Exhaust nozzle according to claim 1, characterized by the fact that the means of external radial support consist of a connecting rod (29) linked by its upstream end to the fixed structure of the turbine and by the other end to the end of an upstream extension (30) of the convergent master petal (4).

8. Exhaust nozzle according to claim 7, characterized by the fact that both the upstream extension (30) of the convergent petal (4) and the connecting rod (29) perform as master petals (33 and 34) and by the fact that the interstices between them are sealed by slave petals.

9. Exhaust nozzle according to claim 1, characterized by the fact that the external annular piece (6) is formed from a single body isostatically connected to the linear actuators (9).

10. Exhaust nozzle according to claim 1, characterized by the fact that the external annular piece (6) is formed from two half-rings (6a, 6b) joined together by a cylindrical linkage whose axis coincides with that of the cylindrical linkage (19) joining the external annular piece (6) to the intermediate annular piece (7), each half-ring being independently rotating around the axis (19) defined by that cylindrical linkage joining both half-rings, in such a way that these can be located in different planes thereby varying the area of the nozzle outlet via the struts (12) linking the divergent master petals (5) to the external annular piece (6).

11. Exhaust nozzle according to claim 1, characterized by the fact that each of the divergent slave petals (42) is formed from one approximately plane piece (43) with an isosceles trapezoid shape, whose upstream edge coincident with the larger base of the contour is supported directly on the divergent master petals (5) and whose downstream edge coincident with the smaller base is joined, via a cylindrical bearing (49) parallel to the axis of the turbine, to another plate (48) supported on the downstream end of the adjacent divergent master petals (5), this trapezoid piece (43) also being joined, via cylindrical bearings (46) located coincident with the oblique sides of the contour, to two approximately plane pieces (44, 45) with a triangular shape which can rotate independently and adapt themselves to the internal surface of the divergent master petal (5) to which they correspond, during the vectoring of the thrust.

12. Exhaust nozzle according to claim 1, characterized by the fact that each of the divergent slave petals (42) consists of two approximately plane pieces (55, 56) with a triangular shape joined by a cylindrical bearing (57) located on the diagonal of the rectangular surface that they define, in such a way that they can adapt themselves to the base of the divergent master petal (5) to which they correspond during the vectoring of the thrust.

13. Exhaust nozzle according to claim 4, characterized by the fact that the said rolling elements consist of freely rotating rollers (22, 23) mounted on the extensions (8a) of the annular pieces (6, 8) and which run along the inside of rails fixed to the facing surfaces of the turbine structure.

14. Exhaust nozzle according to claim 4, characterized by the fact that the said rolling elements consist of fixed rails in the extensions (8a) of the annular pieces (6 and 8), along the interior of which can slide freely rotating rollers (22, 23) mounted in the facing surfaces of the turbine structure.

15. Exhaust nozzle according to claim 1, characterized by the fact that the said guide devices consist of cylindrical pins linked at one end to the extensiones (8a) of the internal (8) and external (6) annular pieces and which are displaced in the direction of the turbine axis along the interior of cylindrically shaped guides fixed to the facing surface of the turbine structure.

16. Exhaust nozzle according to claims 5 or 7, characterized by the fact that the convergent master petal (4) is linked upstream to the internal annular piece (8) by means of a tangencial cylindrical linkage (10) with axis perpendicular to that of the turbine and that the two hinged connecting rod (16) is linked to the fixed structure (50) and to the convergent master petal (4) via tangential cylindrical linkages (17, 18) with axis perpendicular to that of the turbine.

17. Exhaust nozzle according to claims 5 or 7, characterized by the fact that the convergent master petal (4) is linked upstream to the internal annular piece (8) by means of a tangential cylindrical linkages (10) with axis perpendicular to that of the turbine and that the two-hinged connecting rod (16) is linked to the fixed structure (50) of the turbine and to the convergent master petal (4) via spherical linkages (17, 18).

18. Exhaust nozzle according to claims 5 or 7, characterized by the fact that the convergent master petal (4) is linked upstream to the internal annular piece (8) by means of a spherical linkage (10) and that the two-hinged connecting rod (16) is linked to the fixed structure (50) of the turbine and to the convergent master petal (4) via tangential cylindrical linkages (17, 18) with axis perpendicular to that of the turbine.

19. Exhaust nozzle according to claim 10, characterized by the fact that the two half-rings (6a, 6b) of the external annular piece (6) are joined by a cylindrical linkage formed from two cylindrical bearings (19) located on a diameter of the turbine and at opposite ends.

20. Exhaust nozzle according to claim 10, characterized by the fact that the two half-rings (6a, 6b) of the external annular piece (6) are joined by a cylindrical linkage formed from two spherical bearings (19) located on a diameter of the turbine and at opposite ends.

21. Exhaust nozzle according to claim 10, characterized by the fact that the simultaneous governing system for the throat area and of the thrust vectoring have a minimum of four linear actuators (9) connected to the external annular piece (6).

22. Exhaust nozzle according to claim 21, characterized by the fact that the four linear actuators (9) are consecutively located at 90° to each other, two of them coinciding with the bearings of the cylindrical linkage (19).

23. Exhaust nozzle according to claim 10,characterized by the fact that each half-ring (6a, 6b) of the external annular piece (6) is formed from a plurality of ring segments joined together by cylindrical linkages arranged radially and guided by the fixed structure.

24. Exhaust nozzle according to claim 10, characterized by the fact that each half-ring (6a, 6b) of the external annular piece (6) is formed from a plurality of ring segments joined together by spherical linkages and guided by the fixed structure.

25. Exhaust nozzle according to claim 13 and 14,characterized by the fact that between the rollers (23) and rails of the guide elements linking the extensions of the external annular piece (6) and the facing surfaces of the turbine structure, there exists sufficent clearance to allow the necessary rotation of that annular piece during the vectoring of the thrust.

## Patentansprüche

1. Vektorgeführte Druck- und Schubdüse variabler Geometrie für Gasturbinen mit konvergentem Abschnitt (2), dem in Fließrichtung ein divergenter Abschnitt (3) folgt, welche beide an Hand von Hauptschaufeln (4 und 5) gebildet werden und die mittels tangentialen zylindrischen Bindungen (25) mit rechtwinkliger Achse zur Achse der Turbine hin zusammengefügt werden sowie Nebenschaufeln (41 und 42), die auch mittels Gleitverbindungen zusammengefügt werden, deren konvergenter Abschnitt (2) eine variable Halsfläche (15) abgrenzt und deren divergenter Abschnitt (3) variable Geometrie aufweist, um die Druckkraft auf einem Kegel in irgend eine Richtung zu leiten, der sich an der Längsachse der Turbine befindet, einschließlich leitender und außenseitig radialer Abstützelemente für die Regulierung der Halsfläche und Kontrollmittel zur Führung der Druckkraft,
**dadurch gekennzeichnet**,
daß die Veränderung in der Halsfläche (15) und die Führung der Druckkraft mittels einem einzigen Leitsystem durchgeführt werden, das aus einer Kombination von drei untereinander und mit der Achse der Turbine konzentrischen ringförmigen Teilen (6, 7 und 8) sowie aus einer Vielzahl von linearen Antrieben (9), die an den stromaufwärts liegenden Enden an den Aufbau (1) der Turbine angeschlossen sind, besteht; wobei diese ringförmigen Teile (6, 7 und 8) untereinander verbunden und an den Aufbau der Turbine mittels Bindungselementen und Führungsvorrichtungen angeschlossen sind, welche eine gemeinsame axiale Verlagerung der drei ringförmigen Teile (6, 7 und 8) in gleicher Größenordnung in Bezug auf den besagten Aufbau sowie eine relative Drehbewegung des Zwischenglieds (7) und der außenseitigen (6) ringförmigen Teile untereinander und in Bezug auf den inneren ringförmigen Teil (8) gestatten, womit die Neigung des außenseitigen ringförmigen Teils (6) in irgend eine Richtung mit seinem Drehpunkt in der Achse der Turbine gestattet wird; indem die konvergenten Hauptschaufeln (4) in einem Punkt ihrer stromaufwärts liegenden Hälfte mit dem inneren ringförmigen Teil (8) verbunden sind, während der außenseitige ringförmige Teil (6) mittels runden Verbindungen (11) an das stromabwärts liegende Ende der besagten linearen Antriebe (9) angeschlossen ist und außerdem dadurch gekennzeichnet, daß die divergenten Hauptschaufeln (5) querlaufend in mindestens zwei Segmente (5a und 5b) unterteilt sind, die mittels einer zylindrischen Verbindung (24) mit der rechtwinkligen Achse und der Verbindung (25) zwischen den Hauptschaufeln (4 und 5) zusammengefügt sind, wobei das stromabwärts liegende Segment (5b) mit den außenseitigen ringförmigen Teilen (6) mittels einem Holm (12) zusammengefügt ist, der an das Segment über eine runde Verbindung (14) und an den außenseitigen ringförmigen Teil (6) über eine tangentiale zylindrische Verbindung (13) mit der Achse rechtwinklig zu derjenigen der Turbine angeschlossen ist.

2. Schubdüse nach Anspruch 1, dadurch gekennzeichnet, daß die Verbindungselemente, welche die ringförmigen Teile zusammenfügen, aus zwei entgegengesetzten sich rechtwinklig gegenüberliegenden Verbindungen (19, 20) bestehen, von denen die eine (20) das ringförmige Zwischenglied (7) an den inneren ringförmigen Teil (8) und die andere (19) das ringförmige Zwischenglied (7) an den außenseitigen ringförmigen Teil (6) anschließt.

3. Schubdüse nach Anspruch 1, dadurch gekennzeichnet, daß das ringförmige Zwischenglied (7) aus drei konzentrisch runden Segmenten (38, 39 und 40) besteht, die sich gegenseitig speichenförmig abstützen und von denen die beiden äußeren (38 und 39) mit dem außenseitigen ringförmigen Teil (6) und das Zwischenglied (40) mit dem inneren ringförmigen Teil (8) verbunden sind, indem sie somit eine runde Verbindung mit einfacher Symmetrie bilden.

4. Schubdüse nach Anspruch 1, dadurch gekennzeichnet, daß die Führungsvorrichtungen für die ringförmigen Teile (6, 7 und 8) aus zylindrischen Verlängerungen (8a) der inneren (8) und außenseitigen (6) ringförmigen Teile bestehen, die in Richtung stromaufwärts zeigen, welche die Verlängerungen mit konzentrisch zugekehrten Flächen des Turbinenaufbaus überlappen und daß die besagten zugekehrten Flächen über Rollelemente (22, 23) angeschlossen sind, die eine gewisse axiale Verlagerung der inneren (8) und außenseitigen (6) ringförmigen Teile in Bezug auf den Turbinenaufbau sowie außerdem eine gewisse Bewegung des außenseitigen ringförmigen Teils (6) über eine runde Fläche gestatten, die mittig in einem Punkt der Turbinenachse liegt.

5. Schubdüse nach Anspruch 1, dadurch gekennzeichnet, daß die Mittel der außenseitigen speichenförmigen Abstützung aus einem zwei-gelenkig gelagerten Anschluß (16) bestehen, der an einem Ende (18) mit dem festen Aufbau (50) der Turbine und am anderen Ende mit dem Zwischenpunkt (17) der konvergenten Hauptschaufel (4) verbunden ist.

6. Schubdüse nach Anspruch 1, dadurch gekennzeichnet, daß die Mittel der außenseitigen speichenförmigen Abstützung aus einer festen Nocke (36) bestehen, die stromaufwärts liegend in Bezug auf den konvergenten Abschnitt (2) angebracht ist und einen Teil des Turbinenaufbaus darstellt, an dem sie mit Rollen gehalten wird und wo eine Laufrolle (35) geführt wird, die dermaßen montiert ist, daß sie sich frei um das stromaufwärts liegende Ende jeder konvergenten Schaufel (4) außerhalb dieser Schaufeln drehen kann.

7. Schubdüse nach Anspruch 1, dadurch gekennzeichnet, daß die Mittel der außenseitigen speichenförmigen Abstützung aus einer Kurbelstange (29) bestehen, die an ihrem stromaufwärts liegenden Ende mit dem festen Aufbau der Turbine und an ihrem anderen Ende der stromaufwärts liegenden Verlängerung (30) der konvergenten Hauptschaufel (4) verbunden ist.

8. Schubdüse nach Anspruch 7, dadurch gekennzeichnet, daß sowohl die stromaufwärts liegende Verlängerung (30) der konvergenten Schaufel (4) als auch die Kurbelstange (29) als Hauptschaufeln (33 und 34) wirken und außerdem dadurch gekennzeichnet, daß die Hohlräume zwischen ihnen durch Nebenschaufeln abgedichtet sind.

9. Schubdüse nach Anspruch 1, dadurch gekennzeichnet, daß der außenseitige ringförmige Teil (6) von einem einzigen Körper gebildet wird, der isostatisch an die linearen Antriebe (9) angeschlossen ist.

10. Schubdüse nach Anspruch 1, dadurch gekennzeichnet, daß der außenseitige ringförmige Teil (6) von zwei Halbringen (6a, 6b) gebildet wird, die durch eine zylindrische Verbindung zusammengefügt werden, deren Achse mit derjenigen der zylindrischen Verbindung (19) zusammenfällt, indem sie den außenseitigen ringförmigen Teil (6) mit dem ringförmigen Zwischenglied (7) vereint, wobei sich jeder Halbring unabhängig um die Achse (19) dreht, was von der zylindrischen Verbindung bestimmt wird, welche die beiden Halbringe zusammenbringt, so daß diese auf unterschiedlichen Ebenen angebracht werden können, indem sich somit die Zone des Düsenausgangs über Holme (12) ändert, welche die divergenten Hauptschaufeln (5) mit dem außenseitigen ringförmigen Teil (6) verbinden.

11. Schubdüse nach Anspruch 1, dadurch gekennzeichnet, daß eine jede der divergenten Nebenschaufeln (42) von einem ungefähr flachen Teil (43) mit einer gleicheckigen Trapezform gebildet wird, deren stromaufwärts liegende Kante, die mit der größeren Basis der Außenlinie zusammenfällt, direkt auf den divergenten Hauptschaufeln (5) abgestützt wird und deren stromabwärts liegende Kante, die mit der kleineren Basis zusammenfällt, über ein Ringzylinderlager (49) parallel zur Achse der Turbine an eine andere Platte (48) angeschlossen wird, die vom stromabwärts liegenden Ende der angrenzenden Hauptschaufeln (5) getragen wird, indem dieser trapezförmige Teil (43) auch wieder über Ringzylinderlager (46), die mit den schräglaufenden Seiten der Außenlinie zusammenfallen, an zwei ungefähr flache Teile (44, 45) mit dreieckiger Form angeschlossen wird, die sich unabhängig voneinander drehen und sich der inneren Fläche der divergenten Hauptschaufel (5) anpassen können, der sie während der Führung des Schubs entsprechen.

12. Schubdüse nach Anspruch 1, dadurch gekennzeichnet, daß eine jede der divergenten Nebenschaufeln (42) aus zwei ungefähr flachen Teilen (55, 56) mit einer dreieckigen Form besteht, die durch ein Ringzylinderlager (57) zusammengefügt werden, das sich auf der Diagonalen der rechteckigen Fläche befindet, die von ihnen bestimmt wird, so daß sie sich der Basis der divergenten Hauptschaufel (5) anpassen können, der sie während der Führung des Schubs entsprechen.

13. Schubdüse nach Anspruch 4, dadurch gekennzeichnet, daß die besagten Rollelemente (22, 23) frei drehbar sind, die auf die Verlängerungen (8a) der ringförmigen Teile (6, 8) montiert werden und die entlang des Inneren von Schienen, welche auf den äußeren sich entgegengesetzten Flächen des Turbinenaufbaus befestigt sind.

14. Schubdüse nach Anspruch 4, dadurch gekennzeichnet, daß die besagten Rollelemente aus in den Verlängerungen (8a) der ringförmigen Teile (6 und 8) befestigten Schienen bestehen, in deren Innenseite die frei drehbaren Rollen (22, 23) entlanggleiten können, welche auf den äußeren sich entgegengesetzten Flächen des Turbinenaufbaus montiert werden.

15. Schubdüse nach Anspruch 1, dadurch gekennzeichnet, daß die besagten Führungsvorrichtungen aus zylindrischen Nocken bestehen, die an einem Ende mit den Verlängerungen (8a) der inneren (8) und außenseitigen (6) ringförmigen Teile verbunden sind und die in Richtung der Turbinenachse entlang des Inneren der zylindrisch geformten Führungen verlagert werden.

16. Schubdüse nach den Ansprüchen 5 oder 7, dadurch gekennzeichnet, daß die konvergente Hauptschaufel (4) stromaufwärts an den inneren ringförmigen Teil (8) mittels einer tangentialen zylindrischen Verbindung (10) mit der Achse in Bezug auf die Turbine rechtwinklig angeordneten Achse angeschlossen ist und daß die zwei-gelenkig gelagerte Kurbelstange (16) an den festen Aufbau (50) und an die konvergente Hauptschaufel (4) über tangentiale zylindrische Verbindungen (17, 18) mit zu derjenigen in Bezug auf die Turbine rechtwinklig angeordneten Achse angeschlossen ist.

17. Schubdüse nach den Ansprüchen 5 oder 7, dadurch gekennzeichnet, daß die konvergente Hauptschaufel (4) stromaufwärts an den inneren ringförmigen Teil (8) mittels einer tangentialen zylindrischen Verbindung (10) mit der Achse in Bezug auf die Turbine rechtwinklig angeordneten Achse angeschlossen ist und daß die zwei-gelenkig gelagerte Kurbelstange (16) an den festen Aufbau (50) der Turbine und an die konvergente Hauptschaufel (4) über runde Verbindungen (17, 18) angeschlossen ist.

18. Schubdüse nach den Ansprüchen 5 oder 7, dadurch gekennzeichnet, daß die konvergente Hauptschaufel (4) stromaufwärts an den inneren ringförmigen Teil (8) mittels einer runden Verbindung (10) und daß die zwei-gelenkig gelagerte Kurbelstange (16) an den festen Aufbau (50) der Turbine und an die konvergente Hauptschaufel (4) über tangential zylindrische Verbindungen (17, 18) mit der Achse in Bezug auf diejenige der Turbine rechtwinklig angeschlossen ist.

19. Schubdüse nach Anspruch 10, dadurch gekennzeichnet, daß die beiden Halbringe (6a, 6b) des außenseitigen ringförmigen Teils (6) durch eine zylindrische Verbindung zusammengefügt werden, die von zwei zylindrischen Lagern (19) gebildet werden, welche sich auf einem Durchmesser der Turbine und an entgegengesetzten Enden befinden.

20. Schubdüse nach Anspruch 10, dadurch gekennzeichnet, daß die beiden Halbringe (6a, 6b) des außenseitigen ringförmigen Teils (6) durch eine zylindrische Verbindung zusammengefügt werden, die von zwei Rundlagern (19) gebildet werden, welche sich auf einem Durchmesser der Turbine und an entgegengesetzten Enden befinden.

21. Schubdüse nach Anspruch 10, dadurch gekennzeichnet, daß das gleichzeitig wirkende Leitsystem für die Halsfläche und der Druckkraftführung mindestens vier lineare Antriebe (9) besitzt, die an den außenseitigen Teil (6) angschlossen sind.

22. Schubdüse nach Anspruch 21, dadurch gekennzeichnet, daß die vier linearen Antriebe (9) nacheinander zu 90º untereinander angeordnet sind, von denen zwei mit den Lagern der zylindrischen Verbindungen (19) zusammenfallen.

23. Schubdüse nach Anspruch 10, dadurch gekennzeichnet, daß jeder Halbring (6a, 6b) des außenseitigen ringförmigen Teils (6) von einer Vielzahl von Ringelementen gebildet wird, die durch speichenförmig angeordnete zylindrische Verbindungen zusammengefügt werden und die durch den festen Aufbau geführt werden.

24. Schubdüse nach Anspruch 10, dadurch gekennzeichnet, daß jeder Halbring (6a, 6b) des außenseitigen ringförmigen Teils (6) von einer Vielzahl von Ringelementen gebildet wird, die durch runde Verbindungen zusammengefügt werden und die durch den festen Aufbau geführt werden.

25. Schubdüse nach den Ansprüchen 13 und 14, dadurch gekennzeichnet, daß zwischen den Rollelementen (23) und den Schienen der Führungselemente, welche die Verlängerungen des außenseitigen ringförmigen Teils (6) verbinden und den entgegengesetzten äußeren Flächen des Turbinenaufbaus genügend freier Raum besteht, um die erforderliche Drehbewegung des ringförmigen Teils während der Druckkraftführung zu gestatten.

## Revendications

1. Tuyère d'échappement à poussée et géométrie vectorielle variable pour turbines à gaz, comprenant une section convergente (2) suivie, dans la direction de l'écoulement, d'une section divergente (3) ; les deux sections étant construites sur le principe d'aubes maîtresses (4 et 5), reliées entre elles au moyen d'assemblages tangentiels et cylindriques (25) avec axe perpendiculaire à l'axe de la turbine et sur le principe d'aubes esclaves (41 et 42) également reliées entre elles au moyen d'assemblages coulissants ; la section convergente (2) détermine une gorge (15) à surface variable et la section divergente (3) présente une géométrie variable afin d'orienter la poussée dans n'importe quelle direction vers un cône placé autour de l'axe longitudinal de la turbine, comprenant des moyens principaux et externes de support radial pour régler la surface de la gorge et des moyens principaux pour diriger la poussée, caractérisée par le fait que la variation dans la surface de la gorge (15) et la direction de la poussée se font au moyen d'un système unique principal qui consiste, en une association de trois pièces annulaires (6, 7, et 8), concentriques entre elles et par rapport à l'axe de la turbine, et un certain nombre d'actionneurs linéaires (9) reliés à la structure (1) de la turbine par les extrémités en amont ; les pièces annulaires (6, 7, et 8) sont reliées entre elles et à la structure de la turbine par des moyens d'assemblages et des mécanismes de guidage qui permettent le déplacement conjoint des trois pièces annulaires (6, 7, et 8) sur une distance égale par rapport à ladite structure, ainsi qu'un mouvement rotatif relatif des pièces annulaires intermédiaire (7) et externe (6) relativement l'une par rapport à l'autre et par rapport à la pièce annulaire interne (8), permettant l'inclinaison de la pièce annulaire externe (6) dans n'importe quelle direction, avec son centre de rotation dans l'axe de la turbine ; les aubes maîtresses convergentes (4) étant reliées à un point en leur moitié en amont, à la pièce annulaire interne (8), alors que la pièce annulaire externe (6) est reliée par des moyens d'assemblage sphérique (11) à l'extrémité en amont desdits actionneurs linéaires (9), et caractérisée par le fait que les aubes maîtresses divergentes (5) sont transversalement subdivisées en au moins deux segments (5a et 5b) reliés entre eux par des moyens d'assemblage cylindrique (24) avec axe perpendiculaire à l'assemblage (25) entre les aubes maîtresses (4 et 5), le segment en aval (5b) étant relié aux pièces annulaires externes (6) au moyen d'un montant raccordé au segment grâce à un assemblage sphérique (14) et à la pièce annulaire externe (6) par un assemblage tangentiel cylindrique (13) avec axe perpendiculaire à celui de la turbine.

2. Tuyère d'échappement d'après la revendication 1, caractérisée par le fait que les éléments d'assemblage reliant les pièces annulaires entre elles se composent de deux assemblages de diamètre cylindrique (19, 20) perpendiculaires l'un par rapport à l'autre, l'un des deux (20) relie la pièce annulaire intermédiaire (7) à la pièce annulaire interne (8) et l'autre (19) relie la pièce annulaire intermédiaire (7) à la pièce annulaire externe (6).

3. Tuyère d'échappement d'après la revendication 1, caractérisée par le fait que la pièce annulaire intermédiaire (7) se compose de trois segments (38, 39 et 40), qui se servent les uns aux autres d'appui radial, les deux segments externes (38 et 39) sont reliés à la pièce annulaire externe (6) et le segment intermédiaire (40) à la pièce annulaire interne (8), formant un assemblage sphérique à symétrie simple.

4. Tuyère d'échappement d'après la revendication 1, caractérisée par le fait que les mécanismes de guidage pour les pièces annulaires (6, 7 et 8) se composent de prolongements cylindriques (8a) des pièces annulaires interne (8) et externe (6), pointant en amont, qui empiètent sur des surfaces concentriques recouvertes de la structure de la turbine, les prolongements et lesdites surfaces recouvertes étant reliés par des éléments roulants (22, 23) permettant un certain déplacement axial des pièces annulaires interne (8) et externe (6) par rapport à la structure de la turbine, et aussi un certain mouvement de la pièce annulaire externe (6) sur une surface sphérique centrée en un point de l'axe de la turbine.

5. Tuyère d'échappement d'après la revendication 1, caractérisée par le fait que les moyens de support radial externe se composent d'une connexion à deux charnières reliée par une extrémité (18) à la structure fixe (50) de la turbine et par l'autre extrémité à un point intermédiaire (17) de l'aube maîtresse convergente (4).

6. Tuyère d'échappement d'après la revendication 1, caractérisée par le fait que les moyens de support radial externe se composent d'une came fixe (36) placée en amont par rapport à la section convergente (2) et intégrée dans la structure de la turbine, sur laquelle un rouleau (35) s'appuie, roule et est guidé, rouleau monté de telle sorte qu'il peut librement tourner autour de l'extrémité en amont de chaque aube convergente (4), à l'extérieur de ces aubes.

7. Tuyère d'échappement d'après la revendication 1, caractérisée par le fait que les moyens de support radial externe se composent d'une tige de connexion (29) reliée par son extrémité en amont à la structure fixe de la turbine et par l'autre extrémité à l'extrémité d'un prolongement en amont (30) de l'aube maîtresse convergente (4).

8. Tuyère d'échappement d'après la revendication 7, caractérisée par le fait qu'à la fois le prolongement en amont (30) de l'aube convergente (4) et la tige de connexion (29) fonctionnent comme des aubes maîtresses (33 et 34) et par le fait que les interstices entre elles sont fermés par des aubes esclaves.

9. Tuyère d'échappement d'après la revendication 1, caractérisée par le fait que la pièce annulaire externe (6) est formée d'un corps unique relié de façon isostatique aux actionneurs linéaires (9).

10. Tuyère d'échappement d'après la revendication 1, caractérisée par le fait que la pièce annulaire externe (6) est formée de deux demi-anneaux (6a, 6b) reliés entre eux par un assemblage cylindrique, dont l'axe coïncide avec celui de l'assemblage cylindrique (19) reliant la pièce annulaire externe (6) à la pièce annulaire intermédiaire (7), chaque demi-anneau effectuant une rotation indépendante autour de l'axe (19) défini par cet assemblage cylindrique reliant les deux demi-anneaux, de sorte que ces derniers peuvent être placés à des plans différents, variant ainsi la surface de la bouche de la tuyère par les montants (12) reliant les aubes maîtresses divergentes (5) à la pièce annulaire externe (6).

11. Tuyère d'échappement d'après la revendication 1, caractérisée par le fait que chacune des aubes esclaves divergentes (42) est formée d'une pièce approximativement plate (43), ayant la forme d'un trapèze isocèle, dont le bord supérieur coïncidant avec le plus grand côté du périmètre s'appuie directement sur les aubes maîtresses divergentes (5) et dont le bord inférieur coïncidant avec le plus petit côté est relié par un roulement cylindrique (49) parallèle à l'axe de la turbine, à une autre plaque (48) qui s'appuie sur l'extrémité en aval des aubes maîtresses adjacentes et divergentes (5), cette pièce trapézoïdale étant également reliée, par des roulements cylindriques (46) placés juste à côté des côtés obliques du périmètre, à deux pièces approximativement plates (44, 45) de forme triangulaire pouvant tourner indépendamment et s'adapter à la surface intérieure de l'aube maîtresse divergente (5), avec laquelle elles correspondent pendant la direction de la poussée.

12. Tuyère d'échappement d'après la revendication 1, caractérisée par le fait que chacune des aubes esclaves divergentes (42) se compose de deux pièces approximativement plates (55, 56) de forme triangulaire reliées par un roulement cylindrique (57) placé sur la diagonale de la surface rectangulaire qu'elles définissent, de sorte qu'elles peuvent s'adapter à la base de l'aube maîtresse divergente avec laquelle elles correspondent pendant la direction de la poussée.

13. Tuyère d'échappement d'après la revendication 4, caractérisée par le fait que lesdits éléments roulants se composent de rouleaux à rotation libre (22, 23), montés sur les prolongements (8a) des pièces annulaires (6, 8) passant à l'intérieur de rails fixés aux surfaces recouvertes de la structure de la turbine.

14. Tuyère d'échappement d'après la revendication 4, caractérisée par le fait que lesdits éléments roulants se composent de rails fixés sur les prolongements (8a) des pièces annulaires (6 et 8), à l'intérieur desquels peuvent glisser librement des rouleaux de rotation (22, 23) montés sur les surfaces recouvertes de la structure de la turbine.

15. Tuyère d'échappement d'après la revendication 1, caractérisée par le fait que lesdits mécanismes de guidage se composent de broches cylindriques reliées par une extrémité aux prolongements (8a) des pièces annulaires interne (8) et externe (6) se déplaçant dans la direction de l'axe de la turbine à l'intérieur de guides en forme de cylindre fixés à la surface recouverte de la structure de la turbine.

16. Tuyère d'échappement d'après la revendication 5 ou 7, caractérisée par le fait que l'aube maîtresse convergente (4) est reliée en amont à la pièce cylindrique (10) avec axe perpendiculaire à celui de la4 turbine et par le fait que la tige de connexion à deux charnières est reliée à la structure fixe (50) et à l'aube maîtresse convergente (4) par des assemblages tangentiels cylindriques (17, 18) avec axe perpendiculaire à celui de la turbine.

17. Tuyère d'échappement d'après la revendication 5, caractérisée par le fait que l'aube maîtresse convergente (4) est reliée en amont à la pièce annulaire interne (8) au moyen d'assemblages tangentiels cylindriques (10) avec axe perpendiculaire à celui de la turbine et par le fait que la tige de connexion à deux charnières (16) est reliée à la structure fixe (50) de la turbine et à l'aube maîtresse convergente par des assemblages sphériques (17, 18).

18. Tuyère d'échappement d'après les revendications 5 ou 7, caractérisée par le fait que l'aube maîtresse convergente (4) est reliée en amont à la pièce annulaire interne (8) au moyen d'un assemblage sphérique (10) et par le fait que la tige de connexion à deux charnières (16) est reliée à la structure fixe (50) de la turbine et à l'aube maîtresse convergente (4) par des assemblages tangentiels cylindriques (17, 18) avec axe perpendiculaire à celui de la turbine.

19. Tuyère d'échappement d'après la revendication 10, caractérisée par le fait que les deux demi-anneaux (6a, 6b) de la pièce annulaire externe (6) sont reliés par un assemblage cylindrique formé de deux roulements cylindriques (19) placés sur un diamètre de la turbine et aux extrémités opposées.

20. Tuyère d'échappement d'après la revendication 10, caractérisée par le fait que les deux demi-anneaux (6a, 6b) de la pièce annulaire externe (6) sont reliés par un assemblage cylindrique formé de deux roulements sphériques (19) placés sur un diamètre de la turbine et aux extrémités opposées.

21. Tuyère d'échappement d'après la revendication 10, caractérisée par le fait que le système de commande simultané pour la surface de la gorge et la direction de la poussée possède un minimum de quatre actionneurs linéaires (9) reliés à la pièce annulaire externe (6).

22. Tuyère d'échappement d'après la revendication 21, caractérisée par le fait que les quatre actionneurs linéaires (9) sont placés successivement à 90^{º} l'un par rapport à l'autre, deux d'entre eux coïncidant avec les roulements de l'assemblage cylindrique (19).

23. Tuyère d'échappement d'après la revendication 10, caractérisée par le fait que chaque demi-anneau (6a, 6b) est formé d'une pluralité de segments d'anneaux reliés ensemble par des assemblages cylindriques disposés en rayon et guidés par la structure fixe.

24. Tuyère d'échappement d'après la revendication 10, caractérisée par le fait que chaque demi-anneau (6a, 6b) de la pièce annulaire externe (6) est formé d'une pluralité de segments d'anneaux reliés ensemble par des assemblages sphériques et guidés par la structure fixe.

25. Tuyère d'échappement d'après la revendication 13 et 14, caractérisée par le fait qu'entre les rouleaux (23) et les rails des éléments de guidage reliant les prolongements de la pièce annulaire externe (69 et les surfaces recouvertes de la structure de la turbine, il y a suffisamment d'espace pour permettre la rotation nécessaire de cette pièce annulaire pendant la direction de la poussée.
